# EUROPEAN PATENT SPECIFICATION

(11) **EP 1 226 191 B1**
(45) Date of publication and mention of the grant of the patent: **20.07.2005**
(21) Application number: 00935968.8
(22) Date of filing: 15.05.2000
(51) Int. Cl.: C08F 10/00, C08F 4/64, C08F 4/02

(54) **CATALYST SYSTEMS AND THEIR USE IN A POLYMERIZATION PROCESS**
KATALYSATORSYSTEME UND DEREN VERWENDUNG IN EINEM POLYMERISATIONSVERFAHREN
SYSTEMES CATALYSEURS ET LEUR UTILISATION DANS UN PROCEDE DE POLYMERISATION

(30) Priority: 22.10.1999 US 425390; 28.10.1999 US 428576
(43) Date of publication of application: 31.07.2002
(73) Proprietor: Univation Technologies LLC, Houston, TX 77056 (US)
(72) Inventor: MCCONVILLE, David, H., Houston, TX 77059 (US); LOVEDAY, Donald, R., Clarence Center, New York 14032 (US)
(74) Representative: Bublak, Wolfgang, Dr.
(86) International application number: PCT/US2000/013310
(87) International publication number: WO 2001/030860

(56) References cited:
- EP-A- 0 874 005
- WO-A-98/37106

## Description

### FIELD OF THE INVENTION

The present invention relates to a catalyst system comprising a Group 15 containing hafnium catalyst compound for polymerizing olefin(s). The catalyst system mentioned above is supported on a carrier and further comprises an activator. The use of the Group 15 containing hafnium compound is linked to the production of a high molecular weight component in a multimodal polymer composition.

### BACKGROUND OF THE INVENTION

Advances in polymerization and catalysis have resulted in the capability to produce many new polymers having improved physical and chemical properties useful in a wide variety of superior products and applications. With the development of new catalysts, the choice of polymerization-type (solution, slurry, high pressure or gas phase), for producing a particular polymer, has been greatly expanded. Also, advances in polymerization technology have provided more efficient, highly productive and economically enhanced processes. Especially illustrative of these advances is the development of technology utilizing bulky ligand metallocene catalyst systems.

More recently, developments have lead to the discovery of anionic, multidentate heteroatom ligands as discussed by the following articles: (1) Kempe et al., "Aminopyridinato Ligands - New Directions and Limitations", 80^{th} Canadian Society for Chemistry Meeting, Windsor, Ontario, Canada, June 1-4, 1997; (2) Kempe et al., *Inorg. Chem.* 1996 vol 35 6742; (3) Jordan *et al*. of polyolefin catalysts based on hydroxyquinolines (Bei, X.; Swenson, D. C.; Jordan, R. F., *Organometallics* 1997, *16*, 3282); (4) Horton, et.al., "Cationic Alkylzirconium Complexes Based on a Tridentate Diamide Ligand: New Alkene Polymerization Catalysts", Organometallics, 1996, 15, 2672-2674 relates to tridentate zirconium complexes; (5) Baumann, et al., "Synthesis of Titanium and Zirconium Complexes that Contain the Tridentate Diamido Ligand [((t-Bu-d₆)N-O-C₆H₄)₂O)²⁻ {[NON}²⁻) and the Living Polymerization of 1-Hexene by Activated [NON]ZrMe2", Journal of the American Chemical Society, Vol. 119, pp. 3830-3831; (6) Cloke et al., "Zirconium Complexes incorporating the New Tridentate Diamide Ligand [(Me₃Si)N{CH₂CH₂N(SiMe₃)}₂]²⁻(L); the Crystal Structure of [Zr(BH₄)₂L] and [ZrCl{CH(SiMe₃)₂}L]", J. Chem. Soc. Dalton Trans, pp. 25-30, 1995; (7) Clark et al., "Titanium (IV) complexes incorporating the aminodiamide ligand [(SiMe₃)N{CH₂CH₂N (SiMe₃)}₂]²⁻⁽L); the X-ray crystal structure of [TiMe₂(L)] and [TiCl{CH(SiMe₃)₂}(L)]", Journal of Organometallic Chemistry, Vol 50, pp. 333-340, 1995; (8) Scollard et al., "Living Polymerization of alphaolefins by Chelating Diamide Complexes of Titanium", J. Am. Chem. Soc., Vol 118, No. 41, pp. 10008-10009, 1996; and (9) Guerin et al., "Conformationally Rigid Diamide Complexes: Synthesis and Structure of Titanium (IV) Alkyl Derivatives", Organometallics, Vol 15, No. 24, pp. 5085-5089, 1996.

Furthermore, U.S. Patent No. 5,576,460 describes a preparation of arylamine ligands and U.S. Patent No. 5,889,128 discloses a process for the living polymerization of olefins using initiators having a metal atom and a ligand having two group 15 atoms and a group 16 atom or three group 15 atoms. EP 893 454 A1 also describes preferably titanium transition metal amide compounds. In addition, U.S. Patent No. 5,318,935 discusses amido transition metal compounds and catalyst systems especially for the producing isotactic polypropylene. Polymerization catalysts containing bidentate and tridentate ligands are further discussed in U.S. Patent No. 5,506,184.

Traditional bulky ligand metallocene catalyst systems produce polymers that are in some situations more difficult to process into film, for example using old extrusion equipment. One technique to improve these polymers is to blend them with other polymers with the intent to create a blend having the desired properties that each component individually would have. While the two polymer blends tend to be more processable, it is expensive and adds a cumbersome blending step to the manufacturing/fabrication process.

Higher molecular weight confers desirable polymer mechanical properties and stable bubble formation in the production of films. However, this property also inhibits extrusion processing by increasing backpressure in extruders, promotes melt fracture defects in the inflating bubble and potentially, promotes too high a degree of orientation in the finished film. The anionic, multidentate heteroatom containing catalyst systems tend to produce a very high molecular weight polymer. To remedy this, one may form a secondary, minor component of lower molecular weight polymer to reduce extruder backpressure and inhibit melt fracture. Several industrial processes operate on this principle using multiple reactor technology to produce a processable bimodal molecular weight distribution (MWD) high density polyethylene (HDPE) product. HIZEX™, a Mitsui Chemicals HDPE product, is considered the worldwide standard. HIZEX™ is produced in a costly two or more reactor process. In a multiple reactor process, each reactor produces a single component of the final product.

Others in the art have tried to produce two polymers together at the same time in the same reactor using two different catalysts. PCT patent application WO 99/03899 discloses using a typical bulky ligand metallocene catalyst and a conventional-type Ziegler-Natta catalyst in the same reactor to produce a bimodal polyolefin. Using two different types of catalysts, however, result in a polymer whose characteristics cannot be predicted from those of the polymers that each catalyst would produce if utilized separately. This unpredictability occurs, for example, from competition or other influence between the catalyst or catalyst systems used.

Polyethylenes with a higher density and a higher molecular weight are valued in film applications requiring high stiffness, good toughness and high throughput. Such polymers are also valued in pipe applications requiring stiffness, toughness and long-term durability, and particularly resistance to environmental stress cracking.

Thus, there is a desire for an improved catalyst compound and for a combination of catalysts capable of producing processable polyethylene polymers, preferably in a single reactor having desirable combinations of processing, mechanical and optical properties.

### SUMMARY OF THE INVENTION

This invention provides for a catalyst system comprising a Group 15 containing hafnium catalyst compound for polymerizing olefin(s) comprising contacting one or more olefin(s) under polymerizing conditions represented by the formula: 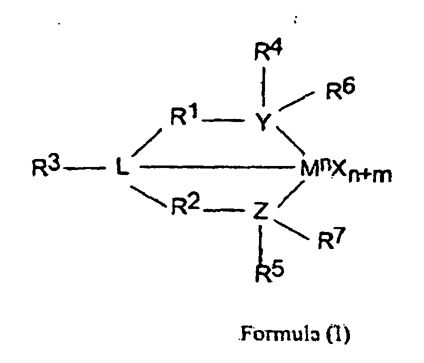 or 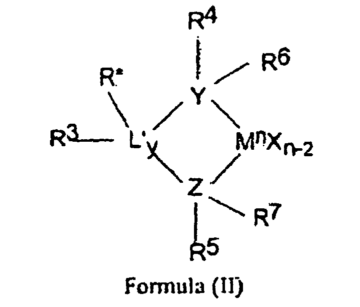 wherein M is hafnium;
each X is independently a leaving group;
y is 0 or 1;
n is the oxidation state of M;
m is the formal charge of the YzL or the YzL's ligand;
L is a Group 15 element;
L' is a Group 15 element or Group 14 containing group;
Y is a Group 15 element;
Z is a Group 15 element;
R¹ and R² are independently a C₁ to C₂₀ hydrocarbon group, a heteroatom containing group having up to twenty carbon atoms, or a group containing silicon, germanium, tin, lead, or phosphorus;
R₃ is absent, a hydrocarbon group, hydrogen, a halogen, or a heteroatom containing group;
R⁴ and R⁵ are independently an alkyl group, an aryl group, a substituted aryl group, a cyclic alkyl group, a substituted cyclic alkyl group, a cyclic arylalkyl group, a substituted cyclic arylalkyl group or a multiple ring system;
R¹ and R² may be interconnected to each other, and/or R⁴ and R⁵ may be interconnected to each other;
R⁶ and R⁷ are independently absent, hydrogen, and alkyl group, halogen, heteroatom or a hydrocarbyl group; and
R* is absent, hydrogen, a Group 14 atom containing group, a halogen, or a heteroatom containing group.

For the above cited catalyst comprising a Group 15 containing hafnium catalyst compound, R⁴ and R⁵ are preferably represented by the formula 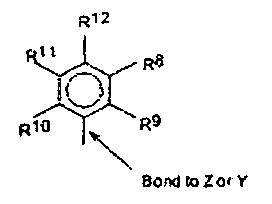 wherein R⁸ to R¹² are each independently hydrogen, a C₁ to C₄₀ alkyl group, a halide, a heteroatom, a heteroatom containing group containing up to 40 carbon atoms, preferably a C₁ to C₂₀ linear or branched alkyl group, preferably a methyl, ethyl, propyl or butyl group, any two R groups form a cyclic group and/or a heterocyclic group;
R⁹, R¹⁰ and R¹² preferably are independently a methyl, ethyl, propyl or butyl group, or wherein R⁹, R¹⁰ and R¹² are methyl groups, and R⁸ and R¹¹ are hydrogen.

For the catalyst system comprising a Group 15 containing hafnium catalyst compound, L, Y and Z are preferably independently nitrogen, R¹ and R² are a hydrocarbon radical, R³ is hydrogen, and R⁶ and R⁷ are absent, or L and Z are independently nitrogen, L' is a hydrocarbyl radical, and R⁶ and R⁷ are absent.

In another embodiment, the invention is directed to a process for polymerizing olefin(s) in the presence of a catalyst system comprising the Group 15 containing hafnium catalyst compound which contains at least one substituted hydrocarbon leaving group having 6 or greater carbon atoms, preferably where the at least one substituted hydrocarbon leaving group is an aryl substituted alkyl group, and most preferably where the aryl substituted alkyl group is benzyl.

In one preferred embodiment, the invention is directed to a catalyst system comprising a Group 15 containing bidentate or tridentate ligated hafnium catalyst compound, wherein the hafnium metal atom is bound to at least one leaving group and to at least two Group 15 atoms, and wherein at least one of the at least two Group 15 atoms is bound to a Group 15 or 16 atom through a bridging group and a bulky ligand metallocene catalyst compound.

In another embodiment the invention is directed to the use of a catalyst system comprising the Group 15 containing bidentate or tridentate ligated hafnium catalyst compound previously described to produce a high molecular weight component and a bulky ligand metallocene catalyst compound to produce a low molecular weight component in a multimodal polymer composition.

The olefin(s) which are polymerized as described above is ethylene, or propylene, or ethylene and at least one other monomer having from 3 to 20 carbon atoms.

The catalyst systems mentioned above comprising a Group 15 hafnium compound are supported on a carrier and further comprise an activator.

The process selected from the group consists of a continuous gas phase process and a continuous slurry phase process.

In another preferred embodiment, all the supported catalyst systems containing a Group 15 hafnium compound described above, are activated by a Lewis acid aluminum containing activator described by the formula:

RₙAl(ArHal)₃₋ₙ

where R is a monoanionic ligand; ArHal is a halogenated C₆ aromatic or higher carbon number polycyclic aromatic hydrocarbon or aromatic ring assembly in which two or more rings (or fused ring systems) are joined directly to one another or together; and n = 1 to 2, preferably n = 1.

In another embodiment, the invention is directed to a supported catalyst system comprising the Group 15 containing bidentate or tridentate ligated hafnium catalyst compound and a bulky ligand metallocene catalyst compound. The Group 15 containing hafnium catalyst compound and the bulky ligand metallocene catalyst compound, if present, are contacted with the activator to form a reaction that is then contacted with the carrier. The activator for this supported catalyst system is also a Lewis acid aluminium as previously described.

The process of polymerizing olefin(s) using the catalyst system comprising the Group 15 containing hafnium compound is conducted at a temperature from between 50 °C and 200 °C.

### BRIEF DESCRIPTION OF THE DRAWINGS

Figure 1 is a gel permeation chromatogram representative of the polymers of the invention of Example 2.
Figure 2 is a gel permeation chromatogram representative of the polymers of the invention of Example 4.

### DETAILED DESCRIPTION OF THE INVENTION

### Introduction

It has unexpectedly been found that the hafnium based Group 15 containing catalyst compounds exhibit a much higher catalyst productivity as compared to their zirconium or titanium analogs. As a result of this discovery it is now possible to provide a highly active polymerization with commercially acceptable level of productivity. Furthermore, it has also been discovered that these Group 15 containing hafnium catalyst compounds of the invention provide for an improved supported catalysts system, particularly for use in slurry phase or gas phase polymerizations. It is well known in the art that supporting catalyst compounds typically results in a lowering of the overall catalyst productivity. This in fact is the case with the zirconium analogs of the Group 15 containing hafnium compounds of the invention. As a result of this detrimental effect, the zirconium analogs are not well suited to being supported. However, as a result of the substantially higher activity of the hafnium based multidentate catalyst compounds of this invention, these catalysts compounds are supportable and retain commercially useful productivities. The polymer produced utilizing these Group 15 containing hafnium catalyst compounds typically have a very high molecular weight.

In addition, the Group 15 containing hafnium catalyst compounds of the invention may be utilized in mixed catalyst systems. Preferably, these mixed systems also include a bulky ligand metallocene catalysts, which generally produce polymers having a lower molecular weight. As a result of this discovery it is now possible to provide for a mixed catalyst system using components, each of which having a commercially acceptable level of productivity, especially when used in a supported form in a slurry or gas phase polymerization process, and particularly in a continuous gas phase process. The mixed catalysts of the invention are particularly useful in producing a multimodal, especially a bimodal, polymer having a high molecular weight and a low molecular weight component.

### Group 15 containing Hafnium Catalyst Compound and Catalyst Systems

In one embodiment, the hafnium based catalyst compounds of the invention are Group 15 bidentate or tridentate ligated hafnium transition metal compound, the preferred Group 15 elements are nitrogen and/or phosphorous, most preferably nitrogen.

The Group 15 containing hafnium catalyst compounds of the invention generally include a hafnium metal atom bound to at least one leaving group and also bound to at least two Group 15 atoms, at least one of which is also bound to a Group 15 or 16 atom through another group.

In one preferred embodiment, at least one of the Group 15 atoms is also bound to a Group 15 atom through another group, which may be a hydrocarbon group, preferably a hydrocarbon group having 1 to 20 carbon atoms, a heteroatom containing group, preferably silicon, germanium, tin, lead, or phosphorus. In this embodiment, it is further preferred that the Group 15 atom be bound to nothing or a hydrogen, a Group 14 atom containing group, a halogen, or a heteroatom containing group. Additionally in these embodiment, it is preferred that each of the two Group 15 atoms are also bound to a cyclic group that may optionally be bound to hydrogen, a halogen, a heteroatom or a hydrocarbyl group, or a heteroatom containing group

In an embodiment of the invention, the Group 15 containing hafnium compound of the invention is represented by the formulas (1) and (2) previously described wherein M is hafnium; each X is independently a leaving group, preferably, an anionic leaving group, and more preferably hydrogen, a hydrocarbyl group, a heteroatom or a halogen, and most preferably an alkyl; y is 0 or 1 (when y is 0 group L' is absent); n is the oxidation state of M, preferably +2, +3 or +4, and more preferably +4; m is the formal charge of the YZL or the YZL' ligand, preferably 0, -1, -2 or -3, and more preferably -2; L is a Group 15 element, preferably nitrogen; L' is a Group 15 element or Group 14 containing group, preferably carbon, silicon or germanium; Y is a Group 15 element, preferably nitrogen or phosphorus, and more preferably nitrogen; Z is a Group 15 element, preferably nitrogen or phosphorus, and more preferably nitrogen; R¹ and R² are independently a C₁ to C₂₀ hydrocarbon group, a heteroatom containing group having up to twenty carbon atoms, silicon, germanium, tin, lead, or phosphorus, preferably a C₂ to C₂₀ alkyl, aryl or arylalkyl group, more preferably a linear, branched or cyclic C₂ to C₂₀ alkyl group, most preferably a C₂ to C₆ hydrocarbon group; R³ is absent or a hydrocarbon group, hydrogen, a halogen, a heteroatom containing group, preferably a linear, cyclic or branched alkyl group having 1 to 20 carbon atoms, more preferably R³ is absent, hydrogen or an alkyl group, and most preferably hydrogen;R⁴ and R⁵ are independently an alkyl group, an aryl group, substituted aryl group, a cyclic alkyl group, a substituted cyclic alkyl group, a cyclic arylalkyl group, a substituted cyclic arylalkyl group or multiple ring system, preferably having up to 20 carbon atoms, more preferably between 3 and 10 carbon atoms, and even more preferably a C₁ to C₂₀ hydrocarbon group, a C₁ to C₂₀ aryl group or a C₁ to C₂₀ arylalkyl group, or a heteroatom containing group, for example PR₃, where R is an alkyl group; R¹ and R² may be interconnected to each other, and/or R⁴ and R⁵ may be interconnected to each other; R⁶ and R⁷ are independently absent, or hydrogen, an alkyl group, halogen, heteroatom or a hydrocarbyl group, preferably a linear, cyclic or branched alkyl group having 1 to 20 carbon atoms, more preferably absent; and R* is absent, or is hydrogen, a Group 14 atom containing group, a halogen, a heteroatom containing group. By "formal charge of the YZL or YZL' ligand", it is meant the charge of the entire ligand absent the metal and the leaving groups X. By "R¹ and R² may also be interconnected" it is meant that R¹ and R² may be directly bound to each other or may be bound to each other through other groups. By "R⁴ and R⁵ may also be interconnected" it is meant that R⁴ and R⁵ may be directly bound to each other or may be bound to each other through other groups.

An alkyl group may be a linear, branched alkyl radicals, or alkenyl radicals, alkynyl radicals, cycloalkyl radicals or aryl radicals, acyl radicals, aroyl radicals, alkoxy radicals, aryloxy radicals, alkylthio radicals, dialkylamino radicals, alkoxycarbonyl radicals, aryloxycarbonyl radicals, carbomoyl radicals, alkyl- or dialkyl- carbamoyl radicals, acyloxy radicals, acylamino radicals, aroylamino radicals, straight, branched or cyclic, alkylene radicals, or combination thereof. An arylalkyl group is defined to be a substituted aryl group.

In a preferred embodiment R⁴ and R⁵ are independently a group represented by the formula (3) previously described wherein R⁸ to R¹² are each independently hydrogen, a C₁ to C₄₀ alkyl group, a halide, a heteroatom, a heteroatom containing group containing up to 40 carbon atoms, preferably a C₁ to C₂₀ linear or branched alkyl group, preferably a methyl, ethyl, propyl or butyl group, any two R groups may form a cyclic group and/or a heterocyclic group. The cyclic groups may be aromatic. In a preferred embodiment R⁹, R¹⁰ and R¹² are independently a methyl, ethyl, propyl or butyl group (including all isomers), in a preferred embodiment R⁹, R¹⁰ and R¹² are methyl groups, and R⁸ and R¹¹ are hydrogen.

In a particularly preferred embodiment R⁴ and R⁵ are both a group represented by the following formula:

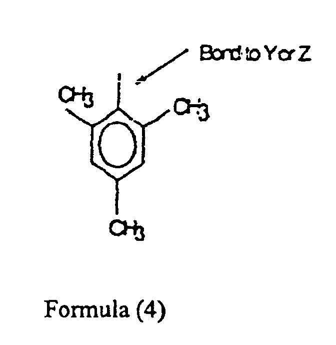

In this embodiment, M is hafnium; each of L, Y, and Z is nitrogen; each of R¹ and R² is a hydrocarbyl group, preferably -CH₂-CH₂-; R³ is hydrogen; and R⁶ and R⁷ are absent.

In a preferred embodiment, at least one X is a substituted hydrocarbon group, preferably a substituted alkyl group having more than 6 carbon atoms, most preferably an aryl substituted alkyl group. The most preferably aryl substituted alkyl group is benzyl.

In a particularly preferred embodiment the Group 15 containing metal compound is represented by the formula: 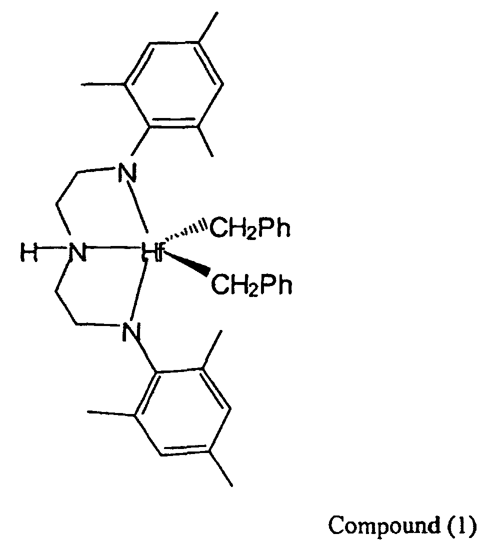 Ph equals phenyl. For convenience the above formula will be referred to as Compound (1) (Hf-HN3).

The Group 15 containing hafnium catalyst compounds of the invention are prepared by methods known in the art, such as those disclosed in EP 0 893 454 A1, U.S. Patent No. 5,889,128 and the references cited in U.S. Patent No. 5,889,128 which are all herein incorporated by reference. U.S. Application Serial Number 09/312,878, filed May 17, 1999, discloses a gas or slurry phase polymerization process using a supported bisamide catalyst, which is also incorporated herein by reference. A preferred direct synthesis of these compounds comprises reacting the neutral ligand, (see for example YZL or YZL' of Formula I or II) with HfXₙ, n is the oxidation state of Hf, each X is an anionic group, such as halide, in a non-coordinating or weakly coordinating solvent, such as ether, toluene, xylene, benzene, methylene chloride, and/or hexane or other solvent having a boiling point above 60°C, at about 20°C to about 150°C (preferably 20°C to 100°C), preferably for 24 hours or more, then treating the mixture with an excess (such as four or more equivalents) of an alkylating agent, such as methyl magnesium bromide in ether.
The magnesium salts are removed by filtration, and the metal complex isolated by standard techniques.

In one embodiment the Group 15 containing hafnium catalyst compound is prepared by a method comprising reacting a neutral ligand, (see for example YZL or YZL' of formula 1 or 2) with a compound represented by the formula HfXₙ (where n is the oxidation state of Hf, each X is an anionic leaving group) in a non-coordinating or weakly coordinating solvent, at about 20°C or above, preferably at about 20°C to about 100°C, then treating the mixture with an excess of an alkylating agent, then recovering the metal complex. In a preferred embodiment the solvent has a boiling point above 60°C, such as toluene, xylene, benzene, and/or hexane. In another embodiment the solvent comprises ether and/or methylene chloride, either being preferable.

### Bulky Ligand Metallocene Catalyst Compounds

In one embodiment, the Group 15 containing hafnium based catalyst compounds of the invention may be combined with a bulky ligand metallocene catalyst compound to form a mixed catalyst system. Generally, bulky ligand metallocene catalyst compounds include half and full sandwich compounds having one or more bulky ligands bonded to at least one metal atom. Typical bulky ligand metallocene compounds are generally described as containing one or more bulky ligand(s) and one or more leaving group(s) bonded to at least one metal atom. In one preferred embodiment, at least one bulky ligands is η-bonded to the metal atom, most preferably η⁵-bonded to the metal atom.

The bulky ligands are generally represented by one or more open, acyclic, or fused ring(s) or ring system(s) or a combination thereof. These bulky ligands, preferably the ring(s) or ring system(s) are typically composed of atoms selected from Groups 13 to 16 atoms of the Periodic Table of Elements, preferably the atoms are selected from the group consisting of carbon, nitrogen, oxygen, silicon, sulfur, phosphorous, germanium, boron and aluminum or a combination thereof. Most preferably the ring(s) or ring system(s) are composed of carbon atoms such as but not limited to those cyclopentadienyl ligands or cyclopentadienyl-type ligand structures or other similar functioning ligand structure such as a pentadiene, a cyclooctatetraendiyl or an imide ligand. The metal atom is preferably selected from Groups 3 through 15 and the lanthanide or actinide series of the Periodic Table of Elements. Preferably the metal is a transition metal from Groups 4 through 12, more preferably Groups 4, 5 and 6, and most preferably the transition metal is from Group 4.

In one embodiment, the bulky ligand metallocene catalyst compounds of the invention are represented by the formula:

L^{A}L^{B}MQₙ (I)

where M is a metal atom from the Periodic Table of the Elements and may be a Group 3 to 12 metal or from the lanthanide or actinide series of the Periodic Table of Elements, preferably M is a Group 4, 5 or 6 transition metal, more preferably M is a Group 4 transition metal, even more preferably M is zirconium, hafnium or titanium. The bulky ligands, L^{A} and L^{B}, are open, acyclic or fused ring(s) or ring system(s) and are any ancillary ligand system, including unsubstituted or substituted, cyclopentadienyl ligands or cyclopentadienyl-type ligands, heteroatom substituted and/or heteroatom containing cyclopentadienyl-type ligands. Non-limiting examples of bulky ligands include cyclopentadienyl ligands, cyclopentaphenanthreneyl ligands, indenyl ligands, benzindenyl ligands, fluorenyl ligands, octahydrofluorenyl ligands, cyclooctatetraendiyl ligands, cyclopentacyclododecene ligands, azenyl ligands, azulene ligands, pentalene ligands, phosphoyl ligands, phosphinimine (WO 99/40125), pyrrolyl ligands, pyrozolyl ligands, carbazolyl ligands, borabenzene ligands and the like, including hydrogenated versions thereof, for example tetrahydroindenyl ligands. In one embodiment, L^{A} and L^{B} may be any other ligand structure capable of η-bonding to M, preferably η³-bonding to M and most preferably η⁵-bonding. In yet another embodiment, the atomic molecular weight (MW) of L^{A} or L^{B} exceeds 60 a.m.u., preferably greater than 65 a.m.u.. In another embodiment, L^{A} and L^{B} may comprise one or more heteroatoms, for example, nitrogen, silicon, boron, germanium, sulfur and phosphorous, in combination with carbon atoms to form an open, acyclic, or preferably a fused, ring or ring system, for example, a heterocyclopentadienyl ancillary ligand. Other L^{A} and L^{B} bulky ligands include but are not limited to bulky amides, phosphides, alkoxides, aryloxides, imides, carbolides, borollides, porphyrins, phthalocyanines, corrins and other polyazomacrocycles. Independently, each L^{A} and L^{B} may be the same or different type of bulky ligand that is bonded to M. In one embodiment of formula (I) only one of either L^{A} or L^{B} is present.

Independently, each L^{A} and L^{B} may be unsubstituted or substituted with a combination of substituent groups R. Non-limiting examples of substituent groups R include one or more from the group selected from hydrogen, or linear, branched alkyl radicals, or alkenyl radicals, alkynyl radicals, cycloalkyl radicals or aryl radicals, acyl radicals, aroyl radicals, alkoxy radicals, aryloxy radicals, alkylthio radicals, dialkylamino radicals, alkoxycarbonyl radicals, aryloxycarbonyl radicals, carbomoyl radicals, alkyl- or dialkyl- carbamoyl radicals, acyloxy radicals, acylamino radicals, aroylamino radicals, straight, branched or cyclic, alkylene radicals, or combination thereof. In a preferred embodiment, substituent groups R have up to 50 non-hydrogen atoms, preferably from 1 to 30 carbon, that can also be substituted with halogens or heteroatoms or the like. Non-limiting examples of alkyl substituents R include methyl, ethyl, propyl, butyl, pentyl, hexyl, cyclopentyl, cyclohexyl, benzyl or phenyl groups and the like, including all their isomers, for example tertiary butyl, isopropyl, and the like. Other hydrocarbyl radicals include fluoromethyl, fluroethyl, difluroethyl, iodopropyl, bromohexyl, chlorobenzyl and hydrocarbyl substituted organometalloid radicals including trimethylsilyl, trimethylgermyl, methyldiethylsilyl and the like; and halocarbyl-substituted organometalloid radicals including tris(trifluoromethyl)-silyl, methyl-bis(difluoromethyl)silyl, bromomethyldimethylgermyl and the like; and disubstitiuted boron radicals including dimethylboron for example; and disubstituted pnictogen radicals including dimethylamine, dimethylphosphine, diphenylamine, methylphenylphosphine, chalcogen radicals including methoxy, ethoxy, propoxy, phenoxy, methylsulfide and ethylsulfide. Non-hydrogen substituents R include the atoms carbon, silicon, boron, aluminum, nitrogen, phosphorous, oxygen, tin, sulfur, germanium and the like, including olefins such as but not limited to olefinically unsaturated substituents including vinyl-terminated ligands, for example but-3-enyl, prop-2-enyl, hex-5-enyl and the like. Also, at least two R groups, preferably two adjacent R groups, are joined to form a ring structure having from 3 to 30 atoms selected from carbon, nitrogen, oxygen, phosphorous, silicon, germanium, aluminum, boron or a combination thereof. Also, a substituent group R group such as 1-butanyl may form a carbon sigma bond to the metal M.

Other ligands may be bonded to the metal M, such as at least one leaving group Q. For the purposes of this patent specification and appended claims the term "leaving group" is any ligand that can be abstracted from a bulky ligand metallocene catalyst compound to form a bulky ligand metallocene catalyst cation capable of polymerizing one or more olefin(s). In one embodiment, Q is a monoanionic labile ligand having a sigma-bond to M. Depending on the oxidation state of the metal, the value for n is 0, 1 or 2 such that formula (I) above represents a neutral bulky ligand metallocene catalyst compound.

Non-limiting examples of Q ligands include weak bases such as amines, phosphines, ethers, carboxylates, dienes, hydrocarbyl radicals having from 1 to 20 carbon atoms, hydrides or halogens and the like or a combination thereof. In another embodiment, two or more Q's form a part of a fused ring or ring system. Other examples of Q ligands include those substituents for R as described above and including cyclobutyl, cyclohexyl, heptyl, tolyl, trifluromethyl, tetramethylene, pentamethylene, methylidene, methyoxy, ethyoxy, propoxy, phenoxy, bis(N-methylanilide), dimethylamide, dimethylphosphide radicals and the like.

In one embodiment, the bulky ligand metallocene catalyst compounds of the invention include those of formula (I) where L^{A} and L^{B} are bridged to each other by at least one bridging group, A, such that the formula is represented by

L^{A}AL^{B}MQₙ (II)

These bridged compounds represented by formula (II) are known as bridged, bulky ligand metallocene catalyst compounds. L^{A}, L^{B}, M, Q and n are as defined above. Non-limiting examples of bridging group A include bridging groups containing at least one Group 13 to 16 atom, often referred to as a divalent moiety such as but not limited to at least one of a carbon, oxygen, nitrogen, silicon, aluminum, boron, germanium and tin atom or a combination thereof. Preferably bridging group A contains a carbon, silicon or germanium atom, most preferably A contains at least one silicon atom or at least one carbon atom. The bridging group A may also contain substituent groups R as defined above including halogens and iron. Non-limiting examples of bridging group A may be represented by R'₂C, R'₂Si, R'₂Si R'₂Si, R'₂Ge, R'P, where R' is independently, a radical group which is hydride, hydrocarbyl, substituted hydrocarbyl, halocarbyl, substituted halocarbyl, hydrocarbyl-substituted organometalloid, halocarbyl-substituted organometalloid, disubstituted boron, disubstituted pnictogen, substituted chalcogen, or halogen or two or more R' may be joined to form a ring or ring system. In one embodiment, the bridged, bulky ligand metallocene catalyst compounds of formula (II) have two or more bridging groups A (EP 664 301 B1).

In one embodiment, the bulky ligand metallocene catalyst compounds are those where the R substituents on the bulky ligands L^{A} and L^{B} of formulas (I) and (II) are substituted with the same or different number of substituents on each of the bulky ligands. In another embodiment, the bulky ligands L^{A} and L^{B} of formulas (I) and (II) are different from each other.

Other bulky ligand metallocene catalyst compounds and catalyst systems useful in the invention may include those described in U.S. Patent Nos. 5,064,802, 5,145,819, 5,149,819, 5,243,001, 5,239,022, 5,276,208, 5,296,434, 5,321,106, 5,329,031, 5,304,614, 5,677,401, 5,723,398, 5,753,578, 5,854,363, 5,856,547 5,858,903, 5,859,158, 5,900,517, 5,939,503 and 5,962,718 and PCT publications WO 93/08221, WO 93/08199, W0 95/07140, WO 98/11144, WO 98/41530, WO 98/41529, WO 98/46650, WO 99/02540 and WO 99/14221 and European publications EP-A-0 578 838, EP-A-0 638 595, EP-B-0 513 380, EP-A1-0 816 372, EP-A2-0 839 834, EP-B1-0 632 819, EP-B1-0 739 361, EP-B1-0 748 821 and EP-B1-0 757 996, all of which are herein fully incorporated by reference.

In one embodiment, bulky ligand metallocene catalysts compounds useful in the invention include bridged heteroatom, mono-bulky ligand metallocene compounds. These types of catalysts and catalyst systems are described in, for example, PCT publication WO 92/00333, WO 94/07928, WO 91/ 04257, WO 94/03506, WO96/00244, WO 97/15602 and WO 99/20637 and U.S. Patent Nos. 5,057,475, 5,096,867, 5,055,438, 5,198,401, 5,227,440 and 5,264,405 and European publication EP-A-0 420 436, all of which are herein fully incorporated by reference.

In this embodiment, the bulky ligand metallocene catalyst compound is represented by the formula:

L^{C}AJMQₙ (III)

where M is a Group 3 to 16 metal atom or a metal selected from the Group of actinides and lanthanides of the Periodic Table of Elements, preferably M is a Group 4 to 12 transition metal, and more preferably M is a Group 4, 5 or 6 transition metal, and most preferably M is a Group 4 transition metal in any oxidation state, especially titanium; L^{C} is a substituted or unsubstituted bulky ligand bonded to M; J is bonded to M; A is bonded to M and J; J is a heteroatom ancillary ligand; and A is a bridging group; Q is a univalent anionic ligand; and n is the integer 0,1 or 2. In formula (III) above, L^{C}, A and J form a fused ring system. In an embodiment, L^{C} of formula (III) is as defined above for L^{A}, A, M and Q of formula (III) are as defined above in formula (I).
In formula (III) J is a heteroatom containing ligand in which J is an element with a coordination number of three from Group 15 or an element with a coordination number of two from Group 16 of the Periodic Table of Elements. Preferably J contains a nitrogen, phosphorus, oxygen or sulfur atom with nitrogen being most preferred.

In another embodiment, the bulky ligand type metallocene catalyst compound is a complex of a metal, preferably a transition metal, a bulky ligand, preferably a substituted or unsubstituted pi-bonded ligand, and one or more heteroallyl moieties, such as those described in U.S. Patent Nos. 5,527,752 and 5,747,406 and EP-B1-0 735 057, all of which are herein fully incorporated by reference.

In an embodiment, the bulky ligand metallocene catalyst compound is represented by the formula:

L^{D}MQ₂(YZ)Xₙ (IV)

where M is a Group 3 to 16 metal, preferably a Group 4 to 12 transition metal, and most preferably a Group 4, 5 or 6 transition metal; L^{D} is a bulky ligand that is bonded to M; each Q is independently bonded to M and Q₂(YZ) forms a unicharged polydentate ligand; A or Q is a univalent anionic ligand also bonded to M; X is a univalent anionic group when n is 2 or X is a divalent anionic group when n is 1; n is 1 or 2.

In formula (IV), L and M are as defined above for formula (I). Q is as defined above for formula (I), preferably Q is selected from the group consisting of-O-, -NR-, -CR₂- and -S-; Y is either C or S; Z is selected from the group consisting of -OR, -NR₂, -CR₃, -SR, -SiR₃, -PR₂, -H, and substituted or unsubstituted aryl groups, with the proviso that when Q is -NR- then Z is selected from one of the group consisting of -OR, -NR₂, -SR, -SiR₃, -PR₂ and -H; R is selected from a group containing carbon, silicon, nitrogen, oxygen, and/or phosphorus, preferably where R is a hydrocarbon group containing from 1 to 20 carbon atoms, most preferably an alkyl, cycloalkyl, or an aryl group; n is an integer from 1 to 4, preferably 1 or 2; X is a univalent anionic group when n is 2 or X is a divalent anionic group when n is 1; preferably X is a carbamate, carboxylate, or other heteroallyl moiety described by the Q, Y and Z combination.

In another embodiment of the invention, the bulky ligand metallocene-type catalyst compounds are heterocyclic ligand complexes where the bulky ligands, the ring(s) or ring system(s), include one or more heteroatoms or a combination thereof. Non-limiting examples of heteroatoms include a Group 13 to 16 element, preferably nitrogen, boron, sulfur, oxygen, aluminum, silicon, phosphorous and tin. Examples of these bulky ligand metallocene catalyst compounds are described in WO 96/33202, WO 96/34021, WO 97/17379, WO 98/22486 and WO 99/40095 (dicarbamoyl metal complexes) and EP-A1-0 874 005 and U.S. Patent No. 5,637,660, 5,539,124, 5,554,775, 5,756,611, 5,233,049, 5,744,417, and 5,856,258 all of which are herein incorporated by reference.

In another embodiment, the bulky ligand metallocene catalyst compounds are those complexes known as transition metal catalysts based on bidentate ligands containing pyridine or quinoline moieties, such as those described in U.S. Application Serial No. 09/103,620 filed June 23, 1998, which is herein incorporated by reference. In another embodiment, the bulky ligand metallocene catalyst compounds are those described in PCT publications WO 99/01481 and WO 98/42664, which are fully incorporated herein by reference.

In one embodiment, the bulky ligand metallocene catalyst compound is represented by the formula:

((Z)XAₜ(YJ))_{q}MQₙ (V)

where M is a metal selected from Group 3 to 13 or lanthanide and actinide series of the Periodic Table of Elements; Q is bonded to M and each Q is a monovalent, bivalent, or trivalent anion; X and Y are bonded to M; one or more of X and Y are heteroatoms, preferably both X and Y are heteroatoms; Y is contained in a heterocyclic ring J, where J comprises from 2 to 50 non-hydrogen atoms, preferably 2 to 30 carbon atoms; Z is bonded to X, where Z comprises 1 to 50 non-hydrogen atoms, preferably 1 to 50 carbon atoms, preferably Z is a cyclic group containing 3 to 50 atoms, preferably 3 to 30 carbon atoms; t is 0 or 1; when t is 1, A is a bridging group joined to at least one of X,Y or J, preferably X and J; q is 1 or 2; n is an integer from 1 to 4 depending on the oxidation state of M. In one embodiment, where X is oxygen or sulfur then Z is optional. In another embodiment, where X is nitrogen or phosphorous then Z is present. In an embodiment, Z is preferably an aryl group, more preferably a substituted aryl group.

It is also contemplated that in one embodiment, the bulky ligand metallocene catalysts of the invention described above include their structural or optical or enantiomeric isomers (meso and racemic isomers, for example see U.S. Patent No. 5,852,143, incorporated herein by reference) and mixtures thereof.

It is further contemplated by the invention that a conventional-type catalyst compound can be combined with the Group 15 containing hafnium catalyst compounds and bulky ligand metallocene catalyst compounds of this invention.

### Activator and Activation Methods

The above described Group 15 containing hafnium catalyst compounds and bulky ligand metallocene catalyst compounds are typically activated in various ways to yield catalyst compounds having a vacant coordination site that will coordinate, insert, and polymerize olefin(s).

For the purposes of this patent specification and appended claims, the term "activator" is defined to be any compound or component or method which can activate any of the Group 15 containing bidentate or tridentate ligated hafnium catalyst compounds and/or the bulky ligand metallocene catalyst compounds of the invention as described above. Non-limiting activators, for example may include a Lewis acid or a non-coordinating ionic activator or ionizing activator or any other compound including Lewis bases, aluminum alkyls, conventional-type cocatalysts and combinations thereof that can convert a neutral Group 15 containing hafnium catalyst compound to a catalytically active Group 15 containing hafnium cation and/or a neutral bulky ligand metallocene catalyst compound to a catalytically active bulky ligand metallocene cation. It is within the scope of this invention to use alumoxane or modified alumoxane as an activator, and/or to also use ionizing activators, neutral or ionic, such as tri (n-butyl) ammonium tetrakis (pentafluorophenyl) boron, a trisperfluorophenyl boron metalloid precursor or a trisperfluoronaphthyl boron metalloid precursor, polyhalogenated heteroborane anions (WO 98/43983) or combination thereof, that would ionize the neutral catalyst compound. While most of the publications discussed herein refer to a bulky ligand metallocene catalyst, it contemplated that the activators and activation methods utilized for these bulky-ligand metallocene catalyst compounds are applicable to the Group 15 containing hafnium catalyst compounds of this invention.

In one embodiment, an activation method using ionizing ionic compounds not containing an active proton but capable of producing both a catalyst cation and a non-coordinating anion are also contemplated, and are described in EP-A- 0 426 637, EP-A- 0 573 403 and U.S. Patent No. 5,387,568, which are all herein incorporated by reference.

There are a variety of methods for preparing alumoxane and modified alumoxanes, non-limiting examples of which are described in U.S. Patent No. 4,665,208, 4,952,540, 5,091,352, 5,206,199, 5,204,419, 4,874,734, 4,924,018, 4,908,463, 4,968,827, 5,308,815, 5,329,032, 5,248,801, 5,235,081, 5,157,137, 5,103,031, 5,391,793, 5,391,529, 5,693,838, 5,731,253, 5,731,451, 5,744,656, 5,847,177, 5,854,166, 5,856,256 and 5,939,346 and European publications EP-A-0 561 476, EP-B1-0 279 586, EP-A-0 594-218 and EP-B1-0 586 665, and PCT publication WO 94/10180, all of which are herein fully incorporated by reference.

Organoaluminum compounds as activators include trimethylaluminum, triethylaluminum, triisobutylaluminum, tri-n-hexylaluminum, tri-n-octylaluminum and the like.

Ionizing compounds may contain an active proton, or some other cation associated with but not coordinated to or only loosely coordinated to the remaining ion of the ionizing compound. Such compounds and the like are described in European publications EP-A-0 570 982, EP-A-0 520 732, EP-A-0 495 375, EP-B1-0 500 944, EP-A-0 277 003 and EP-A-0 277 004, and U.S. Patent Nos. 5,153,157,5,198,401, 5,066,741, 5,206,197, 5,241,025, 5,384,299 and 5,502,124 and U.S. Patent Application Serial No. 08/285,380, filed August 3, 1994, all of which are herein fully incorporated by reference.

Other activators include those described in PCT publication WO 98/07515 such as tris (2, 2', 2"- nonafluorobiphenyl) fluoroaluminate, which publication is fully incorporated herein by reference. Combinations of activators are also contemplated by the invention, for example, alumoxanes and ionizing activators in combinations, see for example, EP-B1 0 573 120, PCT publications WO 94/07928 and WO 95/14044 and U.S. Patent Nos. 5,153,157 and 5,453,410 all of which are herein fully incorporated by reference. WO 98/09996 incorporated herein by reference describes activating catalyst compounds with perchlorates, periodates and iodates including their hydrates. WO 98/30602 and WO 98/30603 incorporated by reference describe the use of lithium (2,2'-bisphenyl-ditrimethylsilicate)•4THF as an activator for a catalyst compound. WO 99/18135 incorporated herein by reference describes the use of organo-boron-aluminum activators. EP-B1-0 781 299 describes using a silylium salt in combination with a non-coordinating compatible anion. Also, methods of activation such as using radiation (see EP-B1-0 615 981 herein incorporated by reference), electro-chemical oxidation, and the like are also contemplated as activating methods for the purposes of rendering the neutral catalyst compound or precursor to a catalyst cation capable of polymerizing olefins. Other activators or methods for activating a catalyst compound are described in for example, U.S. Patent Nos. 5,849,852, 5,859,653 and 5,869,723 and WO 98/32775, WO 99/42467 (dioctadecylmethylammonium-bis(tris(pentafluorophenyl)borane)benzimidazolide), which are herein incorporated by reference.

In one embodiment, the activator is a Lewis acid compound, more preferably an aluminum based Lewis acid compound, and most preferably a neutral, aluminum based Lewis acid compound having at least one, preferably two, halogenated aryl ligands and one or two additional monoanionic ligands not including halogenated aryl ligands. The Lewis acid compounds of this embodiment include those olefin catalyst activator Lewis acids based on aluminum and having at least one bulky, electron-withdrawing ancillary ligand such as the halogenated aryl ligands of tris(perfluorophenyl)borane or tris(perfluoronaphthyl)borane. These bulky ancillary ligands are those sufficient to allow the Lewis acids to function as electronically stabilizing, compatible non-coordinating anions. Stable ionic complexes are achieved when the anions will not be a suitable ligand donor to the strongly Lewis acidic cationic Group 15 containing transition metal cations used in insertion polymerization, i.e., inhibit ligand transfer that would neutralize the cations and render them inactive for polymerization. The Lewis acids fitting this description of this preferred activator, can be described by the following formula:

RₙAl(ArHal)₃₋ₙ, (VI)

where R is a monoanionic ligand and ArHal is a halogenated C₆ aromatic or higher carbon number polycyclic aromatic hydrocarbon or aromatic ring assembly in which two or more rings (or fused ring systems) are joined directly to one another or together, and n = 1 to 2, preferably n=1.

In another embodiment, at least one (ArHal) of formula (VI) is a halogenated C₉ aromatic or higher, preferably a fluorinated naphthyl. Suitable non-limiting R ligands include: substituted or unsubstituted C₁ to C₃₀ hydrocarbyl aliphatic or aromatic groups, substituted meaning that at least one hydrogen on a carbon atom is replaced with a hydrocarbyl, halide, halocarbyl, hydrocarbyl or halocarbyl substituted organometalloid, dialkylamido, alkoxy, siloxy, aryloxy, alkysulfido, arylsulfido, alkylphosphido, alkylphosphido or other anionic substituent; fluoride; bulky alkoxides, where bulky refers to C₄ and higher number hydrocarbyl groups, e.g., up to about C₂₀, such as tert-butoxide and 2,6-dimethyl-phenoxide, and 2,6-di(tert-butyl)phenoxide; -SR; -NR₂, and -PR₂, where each R is independently a substituted or unsubstituted hydrocarbyl as defined above; and, C₁ to C₃₀ hydrocarbyl substituted organometalloid, such as trimethylsilyl.

Examples of ArHal include the phenyl, naphthyl and anthracenyl radicals of U.S. Patent No. 5,198,401 and the biphenyl radicals of WO 97/29845 when halogenated. The use of the terms halogenated or halogenation means for the purposes of this application that at least one third of hydrogen atoms on carbon atoms of the aryl-substituted aromatic ligands are replaced by halogen atoms, and more preferred that the aromatic ligands be perhalogenated. Fluorine is the most preferred halogen.

In another embodiment, the mole ratio of the metal of the activator component to the metal of the supported Group 15 containing hafnium catalyst compound are in the range of between 0.3:1 to 1000:1, preferably 20:1 to 800:1, and most preferably 50:1 to 500:1. Where the activator is an ionizing activator such as those based on the anion tetrakis(penta-fluorophenyl)boron, the mole ratio of the metal of the activator component to the metal component of the Group 15 containing hafnium catalyst compound is preferably in the range of between 0.3:1 to 3:1.

In another embodiment, the invention provides for one or more Group 15 containing hafnium catalyst compounds and one or more bulky ligand metallocene catalyst compounds used in combination with one or more activators discussed above.

### Supports, Carriers and General Supporting Techniques

The above described Group 15 containing hafnium catalysts and the mixed catalyst system, including the Group 15 containing hafnium catalyst and a the bulky ligand metallocene catalyst, may be combined with one or more support materials or carriers using one of the support methods well known in the art or as described below. For example, in a most preferred embodiment, the Group 15 containing hafnium catalyst or the mixed catalyst system of the invention, is in a supported form, for example deposited on, contacted with, vaporized with, bonded to, or incorporated within, adsorbed or absorbed in, or on, a support or carrier. Also, it is also contemplated that when used in a mixed system, the bulky ligand metallocene catalyst system is supported on a separate carrier than the Group 15 containing hafnium catalyst system, particulary for use in a multiple reactor system where one supported catalyst system is used in one reactor to produce the high molecular weight component and the other supported catalyst system is used in another reactor to produce the low molecular component.

The terms "support" or "carrier" are used interchangeably and are any support material, preferably a porous support material, including inorganic or organic support materials. Non-limiting examples of inorganic support materials include inorganic oxides and inorganic chlorides. Other carriers include resinous support materials such as polystyrene, functionalized or crosslinked organic supports, such as polystyrene divinyl benzene polyolefins or polymeric compounds or any other organic or inorganic support material and the like, or mixtures thereof.

The preferred carriers are inorganic oxides that include those Group 2, 3, 4, 5, 13 or 14 metal oxides. The preferred supports include silica, alumina, silica-alumina, and mixtures thereof. Other useful supports include magnesia, titania, zirconia, magnesium chloride, montmorillonite (EP-B1 0 511 665), phyllosilicate, zeolites, talc, clays and the like. Also, combinations of these support materials may be used, for example, silica-chromium, silica-alumina, silica-titania and the like. Additional support materials may include those porous acrylic polymers described in EP 0 767 184 B1, which is incorporated herein by reference.

It is preferred that the carrier, most preferably an inorganic oxide, has a surface area in the range of from about 10 to about 100 m²/g, pore volume in the range of from about 0.1 to about 4.0 cc/g and average particle size in the range of from about 5 to about 500 µm. More preferably, the surface area of the carrier is in the range of from about 50 to about 500 m²/g, pore volume of from about 0.5 to about 3.5 cc/g and average particle size of from about 10 to about 200 µm. Most preferably the surface area of the carrier is in the range is from about 100 to about 400 m²/g, pore volume from about 0.8 to about 5.0 cc/g and average particle size is from about 5 to about 100 µm. The average pore size of the carrier of the invention typically has pore size in the range of from 10 to 1000Å, preferably 50 to about 500Å, and most preferably 75 to about 450Å.

Examples of supporting the catalysts of the invention are described in U.S. Patent Nos. 4,701,432, 4,808,561, 4,912,075, 4,925,821, 4,937,217, 5,008,228, 5,238,892, 5,240,894, 5,332,706, 5,346,925, 5,422,325, 5,466,649, 5,466,766, 5,468,702, 5,529,965, 5,554,704, 5,629,253, 5,639,835, 5,625,015, 5,643,847, 5,665,665, 5,698,487, 5,714,424, 5,723,400, 5,723,402, 5,731,261, 5,759,940, 5,767,032, 5,770,664, 5,846,895 and 5,939,348 and U.S. Application Serial Nos. 271,598 filed July 7, 1994 and 788,736 filed January 23, 1997 and PCT publications WO 95/32995, WO 95/14044, WO 96/06187 and WO 97/02297, and EP-B1-0 685 494 all of which are herein fully incorporated by reference.

There are various other methods in the art for supporting the polymerization catalyst compound or the mixed catalyst system of the invention. For example, the Group 15 containing hafnium catalyst compounds and/or the mixed catalyst system including the bulky ligand metallocene catalyst compounds may contain a polymer bound ligand as described in U.S. Patent Nos. 5,473,202 and 5,770,755, which is herein fully incorporated by reference; the Group 15 containing hafnium catalyst compounds and/or the bulky ligand metallocene catalyst compounds of the invention may be spray dried as described in U.S. Patent No. 5,648,310, which is herein fully incorporated by reference; the support used with the Group 15 containing hafnium catalyst compounds and/or the bulky ligand metallocene catalyst compounds of the invention may be functionalized as described in European publication EP-A-0 802 203, which is herein fully incorporated by reference, or at least one substituent or leaving group is selected as described in U.S. Patent No. 5,688,880, which is herein fully incorporated by reference.

In a preferred embodiment, the invention provides for a Group 15 containing hafnium catalyst system and/or the mixed system including the bulky ligand metallocene catalyst compounds, which include a surface modifier that is used in the preparation of the supported catalyst system as described in PCT publication WO 96/11960, which is herein fully incorporated by reference. The catalyst systems of the invention can be prepared in the presence of an olefin, for example hexene-1.

In a preferred embodiment, the Group 15 containing hafnium catalyst system and the mixed system including the bulky ligand metallocene catalyst compound can be combined with a carboxylic acid salt of a metal ester, for example aluminum carboxylates such as aluminum mono, di- and tri- stearates, aluminum octoates, oleates and cyclohexylbutyrates, as described in U.S. Application Serial No. 09/113,216, filed July 10, 1998.

A preferred method for producing a supported Group 15 containing hafnium catalyst system and/or the bulky ligand metallocene catalyst system is described below and is described in U.S. Application Serial Nos. 265,533, filed June 24, 1994 and 265,532, filed June 24, 1994 and PCT publications WO 96/00245 and WO 96/00243 both published January 4, 1996, all of which are herein fully incorporated by reference. This procedure is used either with the Group 15 containing hafnium catalyst compounds together with or separately from the bulky ligand metallocene catalyst compounds. In this preferred method, the catalyst compound or compounds are slurried in a liquid to form a solution and a separate solution is formed containing an activator and a liquid. The liquid may be any compatible solvent or other liquid capable of forming a solution or the like with the catalyst compound or compounds and/or activator of the invention. In the most preferred embodiment the liquid is a cyclic aliphatic or aromatic hydrocarbon, most preferably toluene. The catalyst compound or compounds and activator solutions are mixed together and added to a porous support such that the total volume of the catalyst compound or compounds solution and the activator solution or the catalyst compound or compounds solution and activator solution is less than four times the pore volume of the porous support, more preferably less than three times, even more preferably less than two times; preferred ranges being from 1.1 times to 3.5 times range and most preferably in the 1.2 to 3 times range.

Procedures for measuring the total pore volume of a porous support are well known in the art. Details of one of these procedures is discussed in Volume 1, *Experimental Methods in Catalytic Research* (Academic Press, 1968) (specifically see pages 67-96).
This preferred procedure involves the use of a classical BET apparatus for nitrogen absorption. Another method well known in the art is described in Innes, *Total Porosity and Particle Density of Fluid Catalysts By Liquid Titration,* Vol. 28, No. 3, Analytical Chemistry 332-334 (March, 1956).

A preferred methods for supporting the Group 15 metal hafnium compounds of the invention are described in U.S. Application Serial Number 09/312,878, filed May 17, 1999, which is fully incorporated herein by reference.
When used in a mixed catalyst system, the Group 15 hafnium compound and the bulky ligand metallocene catalyst compound of the invention are combined at molar ratios of 1:1000 to 1000:1, preferably 1:99 to 99:1, preferably 10:90 to 90:10, more preferably 20:80 to 80:20, more preferably 30:70 to 70:30, more preferably 40:60 to 60:40.
In one embodiment of the mixed system of the invention, particularly in a slurry polymerization process, the loading of the total of Group 15 containing hafnium compound and the bulky ligand metallocene catalyst compound in µmmol per gram (g) of finished supported catalyst (includes the support material, the mixed catalysts and the activator) is about 40 µmmol per gram, preferably about 38 µmmol/g.

In one embodiment, particulary in a gas phase polymerization process utilizing the mixed system of the invention, the loading of the total of Group 15 containing hafnium compound and the bulky ligand metallocene catalyst compound in µmmol per gram of finished supported catalyst (includes the support material, the mixed catalysts and the activator) is less than 30 µmmol per gram, preferably less than 25 µmmol/g, more preferably less than 20 µmmol/gram.

In another embodiment, the R group in formula (VI) above, or ligand, may be covalently bonded to a support material, preferably a metal/metalloid oxide or polymeric support. Lewis base-containing support materials or substrates will react with the Lewis acid activators to form a support bonded Lewis acid compound, a supported activator, where one R group of RₙAl(ArHal)₃₋ₙ is covalently bonded to the support material. For example, where the support material is silica, the Lewis base hydroxyl groups of the silica is where this method of bonding at one of the aluminum coordination sites occurs. Preferably, in this embodiment, the support material is a metal or metalloid oxide, preferably having surface hydroxyl groups exhibiting a pKₐ equal to or less than that observed for amorphous silica, i.e., pKₐ less than or equal to about 11.

While not wishing to be bound to any particular theory, it is believed that the covalently bound anionic activator, the Lewis acid, is believed to form initially a dative complex with a silanol group, for example of silica (which acts as a Lewis base), thus forming a formally dipolar (zwitterionic) Bronsted acid structure bound to the metal/metalloid of the metal oxide support. Thereafter, the proton of the Bronsted acid appears to protonate an R-group of the Lewis acid, abstracting it, at which time the Lewis acid becomes covalently bonded to the oxygen atom. The replacement R group of the Lewis acid then becomes R'-O-, where R' is a suitable support material or substrate, for example, silica or hydroxyl group-containing polymeric support. Any support material that contain surface hydroxyl groups are suitable for use in this particular supporting method. Other support material include glass beads.

In this embodiment, where the support material is a metal oxide composition, these compositions may additionally contain oxides of other metals, such as those of Al, K, Mg, Na, Si, Ti and Zr and should preferably be treated by thermal and/or chemical means to remove water and free oxygen. Typically such treatment is in a vacuum in a heated oven, in a heated fluidized bed or with dehydrating agents such as organo silanes, siloxanes, alkyl aluminum compounds, etc. The level of treatment should be such that as much retained moisture and oxygen as is possible is removed, but that a chemically significant amount of hydroxyl functionality is retained. Thus calcining at up to 800 °C or more up to a point prior to decomposition of the support material, for several hours is permissible, and if higher loading of supported anionic activator is desired, lower calcining temperatures for lesser times will be suitable. Where the metal oxide is silica, loadings to achieve from less than 0.1 mmol to 3.0 mmol activator/g SiO₂ are typically suitable and can be achieved, for example, by varying the temperature of calcining from 200 to 800+ °C. See Zhuralev, *et al,* Langmuir 1987, Vol. 3, 316 where correlation between calcining temperature and times and hydroxyl contents of silica's of varying surface areas is described.

The tailoring of hydroxyl groups available as attachment sites can also be accomplished by the pre-treatment, prior to addition of the Lewis acid, with a less than stoichiometric amount of the chemical dehydrating agents. Preferably those used will be used sparingly and will be those having a single ligand reactive with the silanol groups (e.g., (CH₃)₃SiCl), or otherwise hydrolyzable, so as to minimize interference with the reaction of the transition metal catalyst compounds with the bound activator. If calcining temperatures below 400 °C are employed, difunctional coupling agents (e.g., (CH₃)₂SiCl₂) may be employed to cap hydrogen bonded pairs of silanol groups which are present under the less severe calcining conditions. See for example, "Investigation of Quantitative SiOH Determination by the Silane Treatment of Disperse Silica", Gorski, et *al*, Journ. of Colloid and Interface Science, Vol. 126, No. 2, Dec. 1988, for discussion of the effect of silane coupling agents for silica polymeric fillers that will also be effective for modification of silanol groups on the catalyst supports of this invention. Similarly, use of the Lewis acid in excess of the stoichiometric amount needed for reaction with the transition metal compounds will serve to neutralize excess silanol groups without significant detrimental effect for catalyst preparation or subsequent polymerization.

Polymeric supports are preferably hydroxyl-functional-group-containing polymeric substrates, but functional groups may be any of the primary alkyl amines, secondary alkyl amines, and others, where the groups are structurally incorporated in a polymeric chain and capable of a acid-base reaction with the Lewis acid such that a ligand filling one coordination site of the aluminum is protonated and replaced by the polymer incorporated functionality. See, for example, the functional group containing polymers of U.S. Patent No. 5,288,677, which is herein incorporated by reference.

Other supports include silica, alumina, silica-alumina, magnesia, titania, zirconia, magnesium chloride, montmorillonite, phyllosilicate, zeolites, talc, clays, silica-chromium, silica-alumina, silica-titania, porous acrylic polymers.

In another embodiment of the invention, olefin(s), preferably C₂ to C₃₀ olefin(s) or alpha-olefin(s), preferably ethylene or propylene or combinations thereof are prepolymerized in the presence of a supported Group 15 containing hafnium catalyst and/or the bulky ligand metallocene catalyst of the invention prior to the main polymerization. The prepolymerization can be carried out batchwise or continuously in gas, solution or slurry phase including at elevated pressures. The prepolymerization can take place with any olefin monomer or combination and/or in the presence of any molecular weight controlling agent such as hydrogen. For examples of prepolymerization procedures, see U.S. Patent Nos. 4,748,221, 4,789,359, 4,923,833, 4,921,825, 5,283,278 and 5,705,578 and European publication EP-B-0279 863 and PCT Publication WO 97/44371 all of which are herein fully incorporated by reference.

### Polymerization Process

The catalyst systems, supported catalyst systems or compositions of the invention described above are suitable for use in any prepolymerization and/or polymerization process over a wide range of temperatures and pressures. The temperatures may be in the range of from -60°C to about 280°C, preferably from 50°C to about 200°C, and the pressures employed may be in the range from 1 atmosphere to about 500 atmospheres or higher.

Polymerization processes include solution, gas phase, slurry phase and a high pressure process or a combination thereof. Particularly preferred is a gas phase or slurry phase polymerization of one or more olefins at least one of which is ethylene or propylene.

In one embodiment, the process of this invention is directed toward a solution, high pressure, slurry or gas phase polymerization process of one or more olefin monomers having from 2 to 30 carbon atoms, preferably 2 to 12 carbon atoms, and more preferably 2 to 8 carbon atoms. The invention is particularly well suited to the polymerization of two or more olefin monomers of ethylene, propylene, butene-1, pentene-1, 4-methyl-pentene-1, hexene-1, octene-1 and decene-1.

Other monomers useful in the process of the invention include ethylenically unsaturated monomers, diolefins having 4 to 18 carbon atoms, conjugated or nonconjugated dienes, polyenes, vinyl monomers and cyclic olefins. Non-limiting monomers useful in the invention may include norbomene, norbomadiene, isobutylene, isoprene, vinylbenzocyclobutane, styrenes, alkyl substituted styrene, ethylidene norbomene, dicyclopentadiene and cyclopentene.

In the most preferred embodiment of the process of the invention, a copolymer of ethylene is produced, where with ethylene, a comonomer having at least one alpha-olefin having from 4 to 15 carbon atoms, preferably from 4 to 12 carbon atoms, and most preferably from 4 to 8 carbon atoms, is polymerized in a gas phase process.

In another embodiment of the process of the invention, ethylene or propylene is polymerized with at least two different comonomers, optionally one of which may be a diene, to form a terpolymer.

In one embodiment, the invention is directed to a polymerization process, particularly a gas phase or slurry phase process, for polymerizing propylene alone or with one or more other monomers including ethylene, and/or other olefins having from 4 to 12 carbon atoms.

Typically in a gas phase polymerization process a continuous cycle is employed where in one part of the cycle of a reactor system, a cycling gas stream, otherwise known as a recycle stream or fluidizing medium, is heated in the reactor by the heat of polymerization. This heat is removed from the recycle composition in another part of the cycle by a cooling system external to the reactor. Generally, in a gas fluidized bed process for producing polymers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and fresh monomer is added to replace the polymerized monomer. (See for example U.S. Patent Nos. 4,543,399, 4,588,790, 5,028,670, 5,317,036, 5,352,749, 5,405,922, 5,436,304, 5,453,471, 5,462,999, 5,616,661 and 5,668,228, all of which are fully incorporated herein by reference.)

The reactor pressure in a gas phase process may vary from about 100 psig (690 kPa) to about 500 psig (3448 kPa), preferably in the range of from about 200 psig (1379 kPa) to about 400 psig (2759 kPa), more preferably in the range of from about 250 psig (1724 kPa) to about 350 psig (2414 kPa).

The reactor temperature in a gas phase process may vary from about 30°C to about 120°C, preferably from about 60°C to about 115°C, more preferably in the range of from about 70°C to 110°C, and most preferably in the range of from about 70°C to about 95°C.

Other gas phase processes contemplated by the process of the invention include series or multistage polymerization processes. Also gas phase processes contemplated by the invention include those described in U.S. Patent Nos. 5,627,242, 5,665,818 and 5,677,375, and European publications EP-A- 0 794 200 EP-B1-0 649 992, EP-A- 0 802 202 and EP-B- 634 421 all of which are herein fully incorporated by reference.

In a preferred embodiment, the reactor utilized in the present invention is capable and the process of the invention is producing greater than 500 lbs of polymer per hour (227 Kg/hr) to about 200,000 lbs/hr (90,900 Kg/hr) or higher of polymer, preferably greater than 1000 lbs/hr (455 Kg/hr), more preferably greater than 10,000 lbs/hr (4540 Kg/hr), even more preferably greater than 25,000 lbs/hr (11,300 Kg/hr), still more preferably greater than 35,000 lbs/hr (15,900 Kg/hr), still even more preferably greater than 50,000 lbs/hr (22,700 Kg/hr) and most preferably greater than 65,000 lbs/hr (29,000 Kg/hr) to greater than 100,000 lbs/hr (45,500 Kg/hr).

A slurry polymerization process generally uses pressures in the range of from about 1 to about 50 atmospheres and even greater and temperatures in the range of 0°C to about 120°C. In a slurry polymerization, a suspension of solid, particulate polymer is formed in a liquid polymerization diluent medium to which ethylene and comonomers and often hydrogen along with catalyst are added. The suspension including diluent is intermittently or continuously removed from the reactor where the volatile components are separated from the polymer and recycled, optionally after a distillation, to the reactor. The liquid diluent employed in the polymerization medium is typically an alkane having from 3 to 7 carbon atoms, preferably a branched alkane. The medium employed should be liquid under the conditions of polymerization and relatively inert. When a propane medium is used the process must be operated above the reaction diluent critical temperature and pressure. Preferably, a hexane or an isobutane medium is employed.

A preferred polymerization technique of the invention is referred to as a particle form polymerization, or a slurry process where the temperature is kept below the temperature at which the polymer goes into solution. Such technique is well known in the art, and described in for instance U.S. Patent No. 3,248,179 which is fully incorporated herein by reference. Other slurry processes include those employing a loop reactor and those utilizing a plurality of stirred reactors in series, parallel, or combinations thereof. Non-limiting examples of slurry processes include continuous loop or stirred tank processes. Also, other examples of slurry processes are described in U.S. Patent No. 4,613,484, which is herein fully incorporated by reference.

In an embodiment the reactor used in the slurry process of the invention is capable of and the process of the invention is producing greater than 2000 lbs of polymer per hour (907 Kg/hr), more preferably greater than 5000 lbs/hr (2268 Kg/hr), and most preferably greater than 10,000 lbs/hr (4540 Kg/hr). In another embodiment the slurry reactor used in the process of the invention is producing greater than 15,000 lbs of polymer per hour (6804 Kg/hr), preferably greater than 25,000 lbs/hr (11,340 Kg/hr) to about 100,000 lbs/hr (45,500 Kg/hr).

Examples of solution processes are described in U.S. Patent Nos. 4,271,060, 5,001,205, 5,236,998 and 5,589,555 and PCT WO 99/32525, which are fully incorporated herein by reference

A preferred process of the invention is where the process, preferably a slurry or gas phase process is operated in the presence of the Group 15 containing hafnium catalyst or the mixed catalyst system of the invention, and in the absence of or essentially free of any scavengers, such as triethylaluminum, trimethylaluminum, tri-isobutylaluminum and tri-n-hexylaluminum and diethyl aluminum chloride, dibutyl zinc and the like. This preferred process is described in PCT publication WO 96/08520 and U.S. Patent No. 5,712,352 and 5,763,543, which are herein fully incorporated by reference.

In an embodiment, the method of the invention provides for injecting an unsupported Group 15 containing hafnium catalyst or an unsupported mixed catalyst system into a reactor, particularly a gas phase reactor. In one embodiment the polymerization catalysts of the invention are used in the unsupported form, preferably in a liquid form such as described in U.S. Patent Nos. 5,317,036 and 5,693,727 and European publication EP-A-0 593 083, all of which are herein incorporated by reference. The polymerization catalyst or catalyst(s) in liquid form can be fed with an activator together or separately to a reactor using the injection methods described in PCT publication WO 97/46599, which is fully incorporated herein by reference. Where an unsupported Group 15 containing hafnium catalyst compound is used the mole ratio of the metal of the activator component to the metal of the Group 15 containing hafnium catalyst compound is in the range of between 0.3:1 to 10,000:1, preferably 100:1 to 5000:1, and most preferably 500:1 to 2000:1.

The hydrogen concentration in the reactor is about 140 to 5000 ppm, preferably 200 to 2000 ppm, more preferably 250 to 1900 ppm, more preferably 300 to 1800 ppm, and more preferably 350 to 1700 ppm, more preferably 400 to 1600 ppm, more preferably 500 to 1500 ppm, more preferably 500 to 1400 ppm, more preferably 500 to 1200 ppm, more preferably 600 to 1200 ppm, preferably 700 to 1100 ppm, and more preferably 800 to 1000 ppm. The hydrogen concentration in the reactor being inversely proportional to the polymer's weight average molecular weight (M_{W}).

### Polymer Products

The polymers produced by the processes of the invention can be used in a wide variety of products and end-use applications. The polymers produced by the processes of the invention include linear low density polyethylene, elastomers, plastomers, high density polyethylenes, medium density polyethylenes, low density polyethylenes, polypropylene and polypropylene copolymers. Preferably the new polymers include polyethylene, and even more preferably, when the mixed catalyst system is utilized, the new polymers include bimodal polyethylene produced in a single reactor. In addition to bimodal polymers, it is not beyond the scope of the mixed system of the invention to produce a unimodal or multi-modal polymer.

The polyolefins, particularly polyethylenes, produced by the process of the invention utilizing the Group 15 containing hafnium metal catalyst compound, have a density in the range of from 0.86g/cc to 0.97 g/cc, preferably in the range of from 0.88 g/cc to 0.965 g/cc, more preferably in the range of from 0.900 g/cc to 0.96 g/cc, even more preferably in the range of from 0.905 g/cc to 0.95 g/cc, yet even more preferably in the range from 0.910 g/cc to 0.940 g/cc, and most preferably greater than 0.915 g/cc, preferably greater than 0.920 g/cc, and most preferably greater than 0.925 g/cc. Density is measured in accordance with ASTM-D-1238.

The polyolefins, particularly polyethylenes, produced by the process of the invention utilizing the Group 15 containing hafnium metal catalyst compound and the bulky ligand metallocene catalyst compound mixed system, have a density of 0.89 to 0.97g/cm³. Preferably, polyethylenes having a density of 0.910 to 0.965g/cm³, more preferably 0.915 to 0.960 g/cm³, and even more preferably 0.920 to 0.955 g/cm³ can be produced. In some embodiments, a density of 0.915 to 0.940 g/cm³ would be preferred, in other embodiments densities of 0.930 to 0.970 g/cm³ are preferred. Density is measured in accordance with ASTM-D-1238.

The polymers produced by the process of the invention utilizing the Group 15 containing hafnium metal catalyst compound typically have a molecular weight distribution, a weight average molecular weight to number average molecular weight (M_{w}/Mₙ) of greater than 1.5 to about 15, particularly greater than 2 to about 10, more preferably greater than about 2.2 to less than about 8, and most preferably from 2.5 to 8.

The polymers produced by the process of the invention utilizing the Group 15 containing hafnium metal catalyst compound and the bulky ligand metallocene catalyst compound mixed system typically have a molecular weight distribution, a weight average molecular weight to number average molecular weight (M_{w}/Mₙ) of greater than 5, and more preferably greater than 10.

The polymers produced by the process of the invention utilizing the Group 15 containing hafnium metal catalyst compound typically have a narrow composition distribution as measured by Composition Distribution Breadth Index (CDBI). Further details of determining the CDBI of a copolymer are known to those skilled in the art. See, for example, PCT Patent Application WO 93/03093, published February 18, 1993, which is fully incorporated herein by reference. These polymers of the invention in one embodiment have CDBI's generally in the range of greater than 50% to 100%, preferably 99%, preferably in the range of 55% to 85%, and more preferably 60% to 80%, even more preferably greater than 60%, still even more preferably greater than 65%. In another embodiment, these polymers produced using a catalyst system of the invention have a CDBI less than 50%, more preferably less than 40%, and most preferably less than 30%.

The polymers produced by the process of the invention utilizing the Group 15 containing hafnium metal catalyst compound and the bulky ligand metallocene catalyst compound mixed system typically have a narrow composition distribution as measured by Composition Distribution Breadth Index (CDBI). Further details of determining the CDBI of a copolymer are known to those skilled in the art. See, for example, PCT Patent Application WO 93/03093, published February 18, 1993, which is fully incorporated herein by reference. In another embodiment, polymers produced using this catalyst system of the invention have a CDBI less than 50%, more preferably less than 40%, and most preferably less than 30%.

The polymers produced by the process of the invention utilizing the Group 15 containing hafnium metal catalyst compound, in one embodiment, have a melt index (MI) or (I₂) (as measured by ASTM-D-1238 Condition E at 190°C) in the range from no measurable flow to 1000 dg/min, more preferably from about 0.01 dg/min to about 100 dg/min, even more preferably from about 0.1 dg/min to about 50 dg/min, and most preferably from about 0.1 dg/min to about 10 dg/min.

The polymers produced by the process of the invention utilizing the Group 15 containing hafnium metal catalyst compound and the bulky ligand metallocene catalyst compound mixed system, in one embodiment, typically have an I₂ of about 0.01 to 1000dg/min or less. In a preferred embodiment, the polyolefin is ethylene homopolymer or copolymer. In a preferred embodiment for certain applications, such as films, pipes, molded articles and the like, a melt index of 10dg/min or less is preferred. For some films and molded articles, a melt index of 1dg/min or less is preferred. Polyethylene having a I₂ between 0.01 and 10dg/min is preferred.

The polymers produced by the process of the invention, utilizing the Group 15 containing hafnium metal catalyst compound, in one embodiment, have a melt index ratio (I₂₁/I₂) (I₂₁ is measured by ASTM-D-1238-F) of from 10 to less than 25, more preferably from about 15 to less than 25. In a preferred embodiment these polymers have a melt index ratio of from preferably greater than 25, more preferably greater than 30, even more preferably greater that 40, still even more preferably greater than 50 and most preferably greater than 65. In another embodiment, these polymer of the invention may have a narrow molecular weight distribution and a broad composition distribution or vice-versa, and may be those polymers described in U.S. Patent No. 5,798,427 incorporated herein by reference.

The polymers produced by the process of the invention, utilizing the Group 15 containing hafnium metal catalyst compound and the bulky ligand metallocene catalyst compound mixed system, in one embodiment, have an I₂₁ of 0.1 to 100 dg/min, preferably 0.5 dg/min to 50 dg/min, more preferably 2 dg/min to 20 dg/min (especially for pipe applications), and most preferably for film applications from 5 dg/min to 10 dg/min. In a preferred embodiment, these polymers of the invention have a melt index ratio (I₂₁/I₂) of from preferably greater than 80, more preferably greater than 90, even more preferably greater that 100, still even more preferably greater than 110 and most preferably greater than 120.

The Group 15 containing hafnium metal compound, when used alone, produces a high weight average molecular weight M_{w} polymer such as for example above 100,000, preferably above 150,000, preferably above 200,000, preferably above 250,000, more preferably above 300,000).

The bulky ligand metallocene catalyst compound, when use alone produces a low weight average molecular weight polymer such as for example below 100,000, preferably below 80,000, more preferably below 60,000, still more preferably below 50,000, still even more preferably below 40,000, and most preferably less than 30,000 and greater than 5,000.

In another embodiment the polymer produced by the process of the invention, utilizing the Group 15 containing hafnium metal catalyst compound and the bulky ligand metallocene catalyst compound mixed system, has one or more of the following properties in addition to a combination of those above for this system:
(a) M_{w}/Mₙ of between 15 and 80, preferably between 20 and 60, preferably between 20 and 40. Molecular weight (M_{w} and Mₙ) are measured as described below in the examples section;
(b) a density (as measured by ASTM 2839) of 0.94 to 0.970 g/cm³; preferably 0.945 to 0.965 g/cm³; preferably 0.945 g/cm³ to 0.960 g/cm³;
(c) a residual metal content of 5.0 ppm transition metal or less, preferably 2.0 ppm transition metal or less, preferably 1.8 ppm transition metal or less, preferably 1.6 ppm transition metal or less, preferably 1.5 ppm transition metal or less, preferably 2.0 ppm or less of Group 4 metal, preferably 1.8 ppm or less of Group 4 metal, preferably 1.6 ppm or less of Group 4 metal, preferably 1.5 ppm or less of Group 4 metal (as measured by Inductively Coupled Plasma Emission Spectroscopy (ICPES) run against commercially available standards, where the sample is heated so as to fully decompose all organics and the solvent comprises nitric acid and, if any support is present, another acid to dissolve any support (such as hydrofluoric acid to dissolve silica supports) is present; and/or
(d) 35 weight percent or more high weight average molecular weight component, as measured by size-exclusion chromatography, preferably 40% or more. In a particularly preferred embodiment the higher molecular weight fraction is present at between 35 and 70 weight %, more preferably between 40 and 60 weight %.

In one preferred embodiment the mixed catalyst composition described above is used to make a polyethylene having a density of between 0.94 and 0.970 g/cm³ (as measured by ASTM D 2839) and an I₂ of 0.5 or less g/10min or less. In another embodiment the mixed catalyst composition described above is used to make a polyethylene having an I₂₁ of less than 10 and a density of between about 0.940 and 0.950g/cm³ or an I₂₁ of less than 20 and a density of about 0.945g/cm³ or less.

In another embodiment, the polymers of the invention, produced by the process utilizing the Group 15 containing hafnium metal catalyst compound and the bulky ligand metallocene catalyst compound mixed system, have an ash content less than 100ppm, more preferably less than 75ppm, and even more preferably less than 50ppm is produced.
In another embodiment, the ash contains negligibly small levels, trace amounts, of titanium as measured by Inductively Coupled Plasma/Atomic Emission Spectroscopy (ICPAES) as is well known in the art.

In yet another embodiment, propylene based polymers are produced in the processes of the invention. These polymers include atactic polypropylene, isotactic polypropylene, hemi-isotactic and syndiotactic polypropylene. Other propylene polymers include propylene block or impact copolymers. Propylene polymers of these types are well known in the art see for example U.S. Patent Nos. 4,794,096, 3,248,455, 4,376,851, 5,036,034 and 5,459,117, all of which are herein incorporated by reference.

The polymers of the invention may be blended and/or coextruded with any other polymer. Non-limiting examples of other polymers include linear low density polyethylenes, elastomers, plastomers, high pressure low density polyethylene, high density polyethylenes, polypropylenes and the like.

Polymers produced by the processes of the invention and blends thereof are useful in such forming operations as film, sheet, and fiber extrusion and co-extrusion as well as blow molding, injection molding and rotary molding. Films include blown or cast films formed by coextrusion or by lamination useful as shrink film, cling film, stretch film, sealing films, oriented films, snack packaging, heavy duty bags, grocery sacks, baked and frozen food packaging, medical packaging, industrial liners, membranes, etc. in food-contact and non-food contact applications. Fibers include melt spinning, solution spinning and melt blown fiber operations for use in woven or non-woven form to make filters, diaper fabrics, medical garments, geotextiles, etc. Extruded articles include medical tubing, wire and cable coatings, pipe, geomembranes, and pond liners. Molded articles include single and multi-layered constructions in the form of bottles, tanks, large hollow articles, rigid food containers and toys, etc.

### EXAMPLES

In order to provide a better understanding of the present invention including representative advantages thereof, the following examples are offered.

### Example 1: Catalyst System including Group 15 Containing Hafnium Catalyst

### Preparation of [(2,4,6-Me₃C₆H₂)NHCH₂CH₂]₂NH (Ligand)

A 2 L one-armed Schlenk flask was charged with a magnetic stir bar, diethylenetriamine (23.450 g, 0.227 mol), mesityl bromide (90.51 g, 0.455 mol), tris(dibenzylideneacetone)dipalladium (1.041 g, 1.14 mmol), racemic-2,2'-bis(diphenylphosphino)-1,1'-binaphthyl (2.123 g, 3.41 mmol), sodium tert-butoxide (65.535 g, 0.682 mol), and toluene (800 mL). The reaction mixture was heated to 95 C and stirred. After 4 days the reaction was complete, as judged by proton NMR spectroscopy. All solvent was removed under vacuum and the residues dissolved in diethyl ether (1 L). The ether was washed three times with water (1 L) and saturated aqueous NaCl (500 mL) and dried over magnesium sulfate. Removal of the ether in vacuo yielded a red oil which was dried at 70 C for 12 h under vacuum (yield: 71.10 g, 92%). ¹H NMR δ 6.83 (s, 4), 3.39 (br s, 2), 2.86 (t, 4), 2.49 (t, 4), 2.27 (s, 12), 2.21 (s, 6), 0.68 (br s, 1). ¹³C NMR δ 143.74, 131.35, 129.83, 129.55, 50.17, 48.56, 20.70, 18.51.

### Preparation of {[(2,4,6-Me₃C₆H₂)NCH₂CH₂]₂NH}Zr(CH₂Ph)₂ or (Zr-HN3)

A 500 mL round bottom flask was charged with a magnetic stir bar, tetrabenzyl zirconium (41.729 g, 91.56 mmol), and 300 mL of toluene under dry, oxygen-free nitrogen. Solid triamine ligand above (32.773 g, 96.52 mmol) was added with stirring over 1 minute (the desired compound precipitates). The volume of the slurry was reduced to 100 mL and 300 mL of pentane added with stirring. The solid yellow-orange product was collected by filtration and dried under vacuum (44.811 g, 80% yield). ¹H NMR (C₆D₆) δ 7.22-6.81 (m, 12), 5.90 (d, 2), 3.38 (m, 2), 3.11 (m, 2), 3.01 (m, 1), 2.49 (m, 4), 2.43 (s, 6), 2.41 (s, 6), 2.18 (s, 6), 1.89 (s, 2), 0.96 (s, 2).

### Preparation of {[(2,4,6-Me₃C₆H₂)NCH₂CH₂]₂NH}Hf(CH₂Ph)₂ or (Hf-HN3)

A 250 mL round bottom flask was charged with a magnetic stir bar, tetrabenzyl hafnium (4.063 g, 7.482 mmol), and 150 mL of toluene under dry, oxygen-free nitrogen. Solid triamine ligand above (2.545 g, 7.495 mmol) was added with stirring over 1 minute (the desired compound precipitates). The volume of the slurry was reduced to 30 mL and 120 mL of pentane added with stirring. The solid pale yellow product was collected by filtration and dried under vacuum (4.562 g, 87% yield). ¹H NMR (C₆D₆) δ 7.21-6.79 (m, 12), 6.16 (d, 2), 3.39 (m, 2), 3.14 (m, 2), 2.65 (s, 6), 2.40 (s, 6), 2.35 (m, 2), 2.23 (m, 2), 2.19 (s, 6) 1.60 (s, 2), 1.26 (s, 2), NH obscured.

### Preparation of Catalyst 1A

To 1.335 g of MAO (4.450 g of a 30 weight percent solution in toluene, Albemarle) and 4.691 g of toluene in a 100 mL round bottom flask was added 0.117 g of Zr-HN3 prepared above. The solution was stirred for 15 minutes. 3.550 g of silica (Crosfield ES-70, calcined at 600°C, available from Crosfield Limited, Warrington, England) was added followed by mixing. The mixture was dried overnight under vacuum. Dry Witco Aluminum Stearate #22 (AlSt #22) (CH₃(CH₂)₁₆COO)₂Al-OH available from Witco Corporation, Memphis, Tennessee (0.300 g, 6 weight percent) was added with mixing to yielding 5.160 g of finished catalyst with a loading of 0.35 weight percent zirconium and an Al/Zr ratio of 120:1.

### Preparation of Catalyst 1B

To 1.321 g of MAO (4.405 g of a 30 weight percent solution in toluene, Albemarle) and 4.717 g of toluene in a 100 mL round bottom flask was added 0.133 g of Hf-HN3 prepared above. The solution was stirred for 15 minutes. 3.546 g of silica (Crosfield ES-70, calcined at 600°C available from Crosfield Limited, Warrington, England) was added followed by mixing. The mixture was dried overnight under vacuum. Dry Witco Aluminum Stearate #22 (AlSt #22) (CH₃(CH₂)₁₆COO)₂Al-OH available from Witco Corporation, Memphis, Tennessee (0.300 g, 6 weight percent) was added with mixing to yielding 5.040 g of finished catalyst with a loading of 0.67 weight percent hafnium and an Al/Hf ratio of 120:1.

### Comparative Example 1A: Polymerization with Catalyst 1A

Polymerization was performed in the slurry-phase in a 1-liter autoclave reactor equipped with a mechanical stirrer, an external water jacket for temperature control, a septum inlet and vent line, and a regulated supply of dry nitrogen and ethylene. The reactor was dried and degassed at 160°C. Isobutane (400 mL) was added as a diluent and 0.7 mL of a 25 weight percent trioctyl aluminum solution in hexane was added as a scavenger using a gas tight syringe. The reactor was heated to 90°C. 0.100 g of finished Catalyst 1A (Zr-HN3) above was added with ethylene pressure and the reactor was pressurized with 137 psi (945 kPa) of ethylene. The polymerization was continued for 30 minutes while maintaining the reactor at 90°C and 137 psi (945 kPa) by constant ethylene flow. The reaction was stopped by rapid cooling and vented. 21.0 g of polyethylene was obtained (FI = no flow, activity = 1198 g polyethylene/mmol catalyst•atm•h).

### Example 1B: Polymerization with Catalyst 1B

Polymerization was performed in the slurry-phase in a 1-liter autoclave reactor equipped with a mechanical stirrer, an external water jacket for temperature control, a septum inlet and vent line, and a regulated supply of dry nitrogen and ethylene. The reactor was dried and degassed at 160°C. Isobutane (400 mL) was added as a diluent and 0.7 mL of a 25 weight percent trioctyl aluminum solution in hexane was added as a scavenger using a gas tight syringe. The reactor was heated to 90°C. 0.100 g of finished Catalyst 1B (Hf-HN3) above was added with ethylene pressure and the reactor was pressurized with 146 psi (1007 kPa) of ethylene. The polymerization was continued for 30 minutes while maintaining the reactor at 90°C and 146 psi (1007 kPa) by constant ethylene flow. The reaction was stopped by rapid cooling and vented. 36.7 g of polyethylene was obtained (FI = no flow, activity = 1990 g polyethylene/mmol catalyst•atm•h).

From the data presented above under similar conditions the Group 15 containing hafnium catalyst compound of the invention has almost double the productivity as its zirconium analog.

### Example 2: Mixed Catalyst System Including Group 15 Containing Hafnium Metal Catalyst and Bulky Ligand Metallocene Catalyst

The following examples below use the bulky ligand metallocene catalyst compound (n-propyl-cyclopentadienyl)₂ZrCl₂ which was obtained from Boulder Scientific, Meade, Colorado. The [(2,4,6-Me₃C₆H₂)NHCH₂CH₂]₂NH (Ligand), and the {[(2,4,6-Me₃C₆H₂)NCH₂CH₂]₂NH}Hf(CH₂Ph)₂ (Hf-HN3), were prepared as described above.

### Preparation of Mixed Catalyst 2A

To 1.85 g of MAO (6.18 g of a 30 weight percent solution in toluene, Albemarle Corporation, Baton Rouge, Louisiana) and 6.63 g of toluene in a 100 mL round bottom flask was added 0.139 g of Hf-HN3 and 0.025 g of (n-propyl-cyclopentadienyl)₂ZrCl₂. The solution was stirred for 10 minutes. 4.98g of silica (Crosfield ES-70, calcined at 600°C, available from Crosfield Limited, Warrington, England) was added followed by mixing. The mixture was dried overnight under vacuum. Dry Witco Aluminum Stearate #22 (AlSt #22) (CH₃(CH₂)₁₆COO)₂Al-OH available from Witco Corporation, Memphis, Tennessee (0.28 g, 6 weight percent) was added with mixing to yielding 7.15 g of finished catalyst with a loading of 38 µmol/g of total catalyst, a total metal to aluminum ratio of 120:1, and a Hf-HN3 to (n-propyl-cyclopentadienyl)₂ZrCl₂ ratio of 3:1.

### Preparation of Mixed Catalyst 2B

To 7.95 g of MAO (26.50 g of a 30 weight percent solution in toluene, Albemarle Corporation, Baton Rouge, Louisiana) and 94.41 g of toluene in a 1000 mL round bottom flask was added 0.596 g of Hf-HN3 and 0.108 g of (n-propyl-cyclopentadienyl)₂ZrCl₂ The solution was stirred for 10 minutes. 51.35 g of silica (Crosfield ES-70, calcined at 600°C, available from Crosfield Limited, Warrington, England) was added followed by mixing. The mixture was dried overnight under vacuum. Dry Witco Aluminum Stearate #22 (AlSt #22) (CH₃(CH₂)₁₆COO)₂Al-OH available from Witco Corporation, Memphis, Tennessee (2.40 g, 6 weight percent) was added with mixing to yielding 62.33 g of finished catalyst with a loading of 19 µmol/g of total catalyst and a total metal to Al ration of 120:1.

### Example 2A: Slurry-Phase Ethylene Polymerization

Polymerization is performed in the slurry-phase in a 1-liter autoclave reactor equipped with a mechanical stirrer, an external water jacket for temperature control, a septum inlet and vent line, and a regulated supply of dry nitrogen and ethylene. The reactor is dried and degassed at 160 C. Isobutane (400 mL) is added as a diluent and 0.7 mL of a 25 weight percent trioctyl aluminum solution in hexane is added as a scavenger using a gas tight syringe. The reactor was heated to 90 C. 0.100 g of Mixed Catalyst 2A was added with ethylene pressure and the reactor was pressurized with 136 psi (938 kPa) of ethylene. The polymerization was continued for 30 minutes while maintaining the reactor at 90 C and 136 psi (938 kPa) by constant ethylene flow. The reaction was stopped by rapid cooling and venting. 83.0 g of ethylene homopolymer were recovered (I₂₁ = 3.5, activity is 4770 g PE/mmol cat.•atm•h).

### Example 2B: Gas-Phase Ethylene-Hexene Polymerization

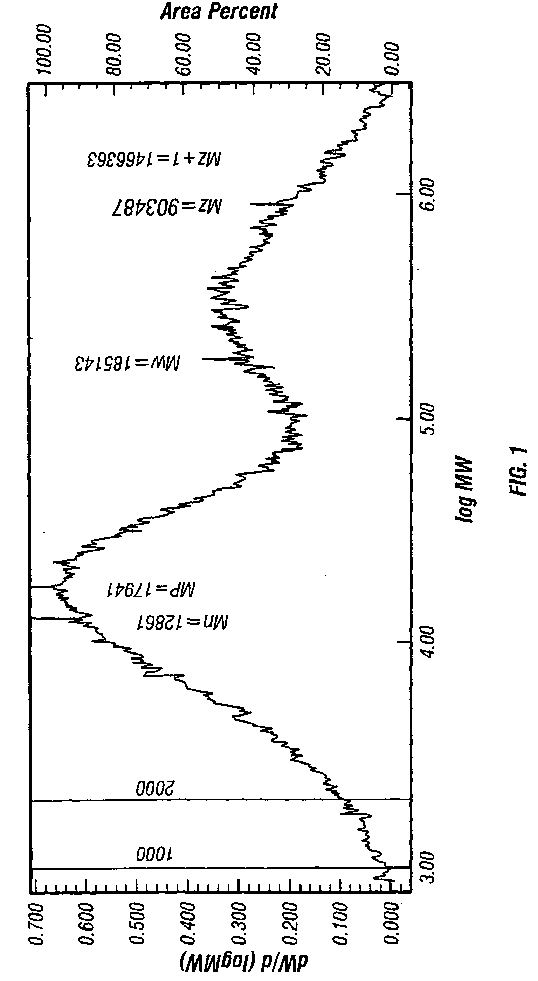

Mixed Catalyst 2B described above was used for ethylene-hexene copolymerization studies described below. A continuous fluid bed gas-phase reactor operated at 300 psi (2069kPa) total pressure and 1.60 ft/s cycle gas velocity (49 cm/s)was used for determining catalyst efficiency, ability to incorporate comonomer (1-hexene) and molecular weight capability. The polymer properties are as follows: I₂₁ = 10.1, I₁₀ = 0.95, I₂ = 0.008, M_{w} = 185,143, Mₙ = 12,861, M_{w}/Mₙ = 14.4, density 0.9487 g/cm³. A summary of the process data is included in Table 1. Figure 1 is a gel permeation chromatogram of the polymers of Example 2.

**Table 1**

| Process Conditions | Results |
|---|---|
| H₂ conc. (ppm) | 802 |
| C₂ conc. (mol %) | 34.9 |
| Hexene conc. (mol %) | 0.08 |
| H₂/C₂ Ratio | 23.0 |
| C₆/C₂ Ratio | 0.002 |
| Reactor Temp (°F/°C) | 185/85.0 |
| Avg. Bed weight (g) | 1911 |
| Production (g/h) | 282 |
| Residence Time (h) | 6.8 |
| Productivity (g/g) - MB¹ | 696 |
| Total Bed Turnovers | 5.9 |

| | |
|---|---|
| ¹MB = Material Balance | |

### Example 3: Catalyst System Including Silica Bound Aluminum and HF-HN3

### Preparation of Silica Bound Aluminum (Si-O-Al(C₆F₅)₂)

A sample of 40.686 g of silica (Davison 948, calcined at 600 C, available from W.R. Grace, Davison Division, Baltimore, Maryland) was slurried in 300 mL of toluene in a 500 mL round bottom flask. Solid Al(C₆F₅)₃•toluene (15.470 g, 24.90 mmol) was added and the mixture stirred for 30 minutes. The mixture was allowed to stand for 18 hours. The silica bound aluminum was isolated by filtration and dried for 6 hours under vacuum with a yield of 49.211 g. Synthesis of Al(C₆F₅)₃•toluene was prepared in accordance with the method described in EP 0 694 548 A1, which is fully incorporated herein by reference.

### Preparation of Catalyst 3A

To 1.000 g of silica bound aluminum (prepared above) in 20 mL of toluene was added Hf-HN3 (0.087 g, 0.125 mmol), (prepared as described above in Example 1.), in 5 mL of toluene. The mixture was stirred for 30 minutes. The silica turned orange-red from colorless. The silica was isolated by filtration and dried under vacuum for 6 hours with a yield of 1.059 g. The final transition metal loading was 115 µmol/g, transition metal to silica bound aluminum.

### Example 3A: Slurry-Phase Ethylene Polymerization with Catalyst 3A

Polymerization was performed in the slurry-phase in a 1-liter autoclave reactor equipped with a mechanical stirrer, an external water jacket for temperature control, a septum inlet and vent line, and a regulated supply of dry nitrogen and ethylene. The reactor was dried and degassed at 160°C. Isobutane (400 mL) was added as a diluent and 0.7 mL of a 25 weight percent trioctyl aluminum solution in hexane was added as a scavenger using a gas tight syringe. The reactor was heated to 90°C. 0.200 g of finished Catalyst 3A was added with ethylene pressure and the reactor was pressurized with 134 psi (924 kPa) of ethylene. The polymerization was continued for 30 minutes while maintaining the reactor at 90°C and 134 psi (924 kPa) by constant ethylene flow. The reaction was stopped by rapid cooling and vented. 37.4 g of polyethylene was obtained (FI = no flow, activity = 364 g polyethylene/mmol catalyst•atm•h).

### Example 3B: Slurry-Phase Ethylene-Hexene Polymerization with Catalyst 3A

Polymerization was performed in the slurry-phase in a 1-liter autoclave reactor equipped with a mechanical stirrer, an external water jacket for temperature control, a septum inlet and vent line, and a regulated supply of dry nitrogen and ethylene. The reactor was dried and degassed at 160°C. Isobutane (400 mL) is added as a diluent, 35 mL of 1-hexene, and 0.7 mL of a 25 weight percent trioctyl aluminum in hexane is added as a scavenger using a gas tight syringe. The reactor was heated to 90°C. 0.100 g of finished catalyst 3A was added with ethylene pressure and the reactor was pressurized with 113 psi (889 kPa) of ethylene. The polymerization was continued for 25 minutes while maintaining the reactor at 90°C and 113 psi (889 kPa) by constant ethylene flow. The reaction was stopped by rapid cooling and vented. 68.0 g of polyethylene was obtained (FI = no flow, activity = 1650 g polyethylene/mmol catalyst•atm•h).

### Example 4: Mixed Catalyst System Including Silica Bound Aluminum and HF-HN3

The following examples below use the bulky ligand metallocene-type catalyst compound (dimethylsilylbis(3-n-propylcyclopentadienyl)zirconium dichloride (DMSP-Cl₂)), which was obtained from Boulder Scientific, Meade, Colorado. Synthesis of Al(C₆F₅)₃•toluene was prepared in accordance with method of described in EP 0 694 548 A1, which is fully incorporated by reference.

### Preparation of [(2,4,6-Me₃C₆H₂)NHCH₂CH₂]₂NH ligand

A 2 L one-armed Schlenk flask was charged with a magnetic stir bar, diethylenetriamine (23.450 g, 0.227 mol), 2-bromomesitylene (90.51 g, 0.455 mol), tris(dibenzylideneacetone)dipalladium (1.041 g, 1.14 mmol), racemic-2,2'-bis(diphenylphosphino)-1,1'-binaphthyl (racemic BINAP) (2.123 g, 3.41 mmol), sodium tert-butoxide (65.535 g, 0.682 mol), and toluene (800 mL) under dry, oxygen-free nitrogen. The reaction mixture was stirred and heated to 100 C. After 18 h the reaction was complete, as judged by proton NMR spectroscopy. All remaining manipulations can be performed in air. All solvent was removed under vacuum and the residues dissolved in diethyl ether (1 L). The ether was washed with water (3 times 250 mL) followed by saturated aqueous NaCl (180 g in 500 mL) and dried over magnesium sulfate (30 g). Removal of the ether in vacuo yielded a red oil which was dried at 70 C for 12 h under vacuum (yield: 71.10 g, 92%). ¹H NMR (C₆D₆) δ 6.83 (s, 4), 3.39 (br s, 2), 2.86 (t, 4), 2.49 (t, 4), 2.27 (s, 12), 2.21 (s, 6), 0.68 (br s, 1).

### Preparation of {[(2,4,6-Me₃C₆H₂)NCH₂CH₂]₂NH}Hf(CH₂Ph)₂ (Hf-HN3)

A 250 mL round bottom flask was charged with a magnetic stir bar, tetrabenzyl hafnium (4.063 g, 7.482 mmol), and 150 mL of toluene under dry, oxygen-free nitrogen. Solid triamine ligand above (2.545 g, 7.495 mmol) was added with stirring over 1 minute (the desired compound precipitates). The volume of the slurry was reduced to 30 mL and 120 mL of pentane added with stirring. The solid pale yellow product was collected by filtration and dried under vacuum (4.562 g, 87% yield). ¹H NMR (C₆D₆) δ 7.21-6.79 (m, 12), 6.16 (d, 2), 3.39 (m, 2), 3.14 (m, 2), 2.65 (s, 6), 2.40 (s, 6), 2.35 (m, 2), 2.23 (m, 2), 2.19 (s, 6) 1.60 (s, 2), 1.26 (s, 2), NH obscured.

### Preparation of Dimethylsilylbis(3-n-propylcyclopentadienyl)zirconium Dimethyl (DMSP-Me₂)

A 250 mL round bottom flask was charged with a magnetic stir bar, 5.990 g of DMSP-Cl₂ (13.84 mmol) and 125 mL of diethyl ether. The solution was cooled to -30 C and 20.3 mL of MeLi (1.4 M in ether, 28.42 mmol) added dropwise with stirring over 5 minutes. The mixture was warmed to room temperature and stirred for 2 hours. The ether was removed under vacuum and the residues extracted with 50 mL toluene. The toluene mixture was filtered through Celite to remove LiCl and the toluene removed under vacuum. The oily residues were dissolved in pentane, filtered through Celite, and the solvent removed to give a clear yellow oil. The oil is a 1:1 mixture of rac and meso. ¹H NMR (C₆D₆) δ 6.49 (m, 4), 5.48 (m, 2), 5.39 (m, 2), 5.25 (m, 2), 5.20 (m, 2), 2.59 (m, CH₂, 8), 1.62 (m, CH₂, 8), 0.96 (m, CH₃, 12), 0.20 (s, SiMe, 3), 0.18 (s, SiMe, 6), 0.16 (s, SiMe, 3), -0.08 (s, ZrMe, 3), -0.17 (s, ZrMe, 6), -0.23 (s, ZrMe, 3).

### Preparation of Silica Bound Aluminum (-Si-O-Al(C₆F₅)₂)

11.50 g of silica (Davison 948, calcined at 600 C available from W.R. Grace, Davison Division, Baltimore, Maryland) was slurried in 300 mL of toluene in a 500 mL round bottom flask and solid Al(C₆F₅)₃•toluene (5.706 g, 24.90 mmol) added. The mixture was heated to 85 C for 1 hour then left to cool overnight (20 hours). The silica bound aluminum was isolated by filtration and dried for 6 hours under vacuum (yield, 13.81 g).

### Preparation of Catalyst 4A

To 1.000 g of silica bound aluminum in 20 mL of toluene was added Hf-HN3 (0.056 g, 0.080 mmol) in 5 mL of toluene. The mixture was stirred for 30 minutes. The silica turned orange-red from colorless. The silica was isolated by filtration and dried under vacuum for 6 hours (yield, 1.041 g). The final transition metal loading was 76 µmol/g.

### Preparation of Catalyst 4B

To 1.000 g of silica bound aluminum in 20 mL of toluene was added DMSP-Me₂ (0.031 g, 0.079 mmol) in 5 mL of toluene. The mixture was stirred for 30 minutes. The silica turned orange-red from colorless. The silica was isolated by filtration and dried under vacuum for 6 hours (yield, 1.059 g). The final transition metal loading was 76 µmol/g.

### Preparation of Catalyst 4C (Mixture)

To 2.000 g of silica bound aluminum in 40 mL of toluene was added Hf-HN3 (0.098 g, 0.140 mmol) and DMSP-Me₂ (0.008g, 0.20 mmol). The mixture was stirred for 30 minutes. The silica turned orange-red from colorless. The silica was isolated by filtration and dried under vacuum for 6 hours (yield, 2.065 g). The final transition metal loading was 76 µmol/g.

### Example 4A: Slurry-Phase Ethylene Polymerization with Catalyst 4A

Polymerization was performed in the slurry-phase in a 1-liter autoclave reactor equipped with a mechanical stirrer, an external water jacket for temperature control, a septum inlet, a vent line, and a regulated supply of dry nitrogen and ethylene. The reactor was dried and degassed at 160°C. Triisobutyl aluminum (100 µL) was added as a scavenger using a gas tight syringe followed by isobutane (400 mL) diluent. The reactor was heated to 85°C. 0.025 g of finished Catalyst 4A was added with ethylene pressure and the reactor was pressurized with 124 psi (975 kPa) of ethylene. The polymerization was continued for 40 minutes while maintaining the reactor at 85°C and 124 psi (975 kPa) by constant ethylene flow. The reaction was stopped by rapid cooling and vented. 9.2 g of polyethylene was obtained (FI = no flow, activity = 879 g polyethylene/mmol catalyst•atm•h).

### Example 4B: Slurry-Phase Ethylene Polymerization with Catalyst 4B

Polymerization was performed in the slurry-phase in a 1-liter autoclave reactor equipped with a mechanical stirrer, an external water jacket for temperature control, a septum inlet, a vent line, and a regulated supply of dry nitrogen and ethylene. The reactor was dried and degassed at 160°C. Triisobutyl aluminum (100 µL) was added as a scavenger using a gas tight syringe followed by isobutane (400 mL) diluent. The reactor was heated to 85°C. 0.025 g of finished Catalyst 4B was added with ethylene pressure and the reactor was pressurized with 122 psi (959 kPa) of ethylene. The polymerization was continued for 40 minutes while maintaining the reactor at 85°C and 122 psi (959 kPa) by constant ethylene flow. The reaction was stopped by rapid cooling and vented. 74.7 g of polyethylene was obtained (MI = 193, activity = 7250 g polyethylene/mmol catalyst•atm•h).

### Example 4C: Slurry-Phase Ethylene Polymerization with Catalyst 4C

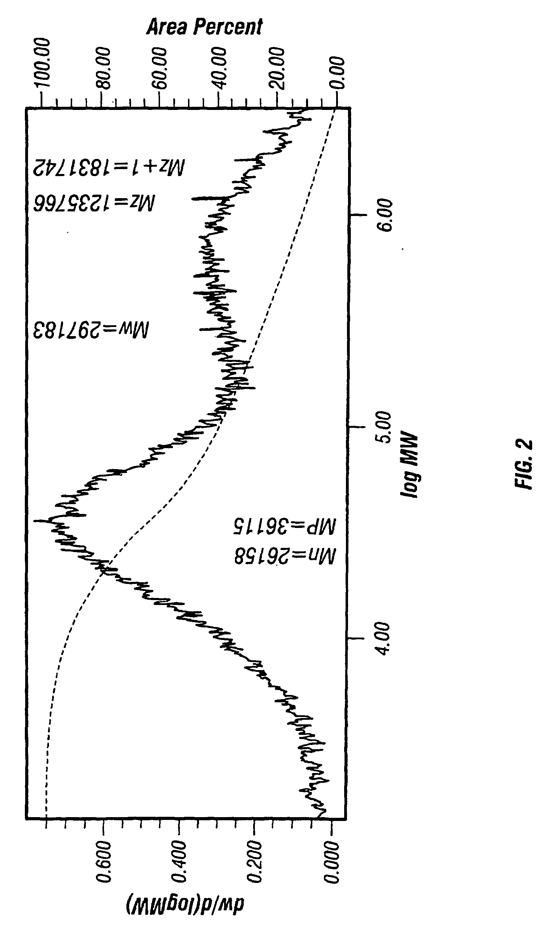

Polymerization was performed in the slurry-phase in a 1-liter autoclave reactor equipped with a mechanical stirrer, an external water jacket for temperature control, a septum inlet, a vent line, and a regulated supply of dry nitrogen and ethylene. The reactor was dried and degassed at 160°C. Triisobutyl aluminum (100 µL) was added as a scavenger using a gas tight syringe followed by isobutane (400 mL) diluent. The reactor was heated to 85°C. 0.025 g of finished Catalyst 4C was added with ethylene pressure and the reactor was pressurized with 123 psi (967 kPa) of ethylene. The polymerization was continued for 40 minutes while maintaining the reactor at 85°C and 123 psi (967 kPa) by constant ethylene flow. The reaction was stopped by rapid cooling and vented. 17.2 g of polyethylene was obtained (FI = 10.9, activity = 1656 g polyethylene/mmol catalyst•atm•h). Figure 2 is a gel permeation chromatogram respesentative of the polymers prepared in Example 4.

### Example 5: Catalyst system including benzyl leaving groups

### Preparation of [(2,4,6-Me₃C₆H₂)NHCH₂CH₂]₂ (NH ligand)

A 2 L one-armed Schlenk flask was charged with a magnetic stir bar, diethylenetriamine (23.450 g, 0.227 mol), 2-bromomesitylene (90.51 g, 0.455 mol), tris(dibenzylideneacetone)dipalladium (1.041 g, 1.14 mmol), racemic-2,2'-bis(diphenylphosphino)-1,1'-binaphthyl (racemic BINAP) (2.123 g, 3.41 mmol), sodium tert-butoxide (65.535 g, 0.682 mol), and toluene (800 mL) under dry, oxygen-free nitrogen. The reaction mixture was stirred and heated to 100 C. After 18 h the reaction was complete, as judged by proton NMR spectroscopy. All remaining manipulations can be performed in air. All solvent was removed under vacuum and the residues dissolved in diethyl ether (1 L). The ether was washed with water (3 ****250 mL) followed by saturated aqueous NaCl (180 g in 500 mL) and dried over magnesium sulfate (30 g). Removal of the ether in vacuo yielded a red oil which was dried at 70 C for 12 h under vacuum (yield: 71.10 g, 92%). ¹H NMR (C₆D₆) δ 6.83 (s, 4), 3.39 (br s, 2), 2.86 (t, 4), 2.49 (t, 4), 2.27 (s, 12), 2.21 (s, 6), 0.68 (br s, 1).

### Preparation of {[(2,4,6-Me₃C₆H₂)NCH₂CH₂]₂NH}HfCl₂ (HfCl₂-HN3)

3.075 g of Hf(NMe₂)₄ (8.66 mmol) was dissolved in 100 mL of pentane in a 250 mL round bottom flask. 2.942 g of [(2,4,6-Me₃C₆H₂)NHCH₂CH₂]₂NH (8.66 mmol) was added as a solid and the solution stirred for 2 hours. The mixed amide {[(2,4,6-Me₃C₆H₂)NCH₂CH₂]₂NH}Hf(NMe₂)₂ was identified by proton NMR but was not isolated. ¹H NMR (C₆D₆) δ 6.95 (s, 4), 3.40 (m, 2), 3.08 (s, 6), 3.04 (m, 2), 2.52 (m, 4), 2.49 (s, 6), 2.47 (s, 6), 2.32 (s, 6), 2.20 (s, 6), 1.72 (m, 1). The solvent was removed under vacuum. The residues were dissolved in toluene and 2.825 g of ClSiMe₃ (26.0 mmol) added in one portion. The solution was stirred for 24 hours. The solvent was removed under vacuum and the solids suspended in pentane. The solid was collected by filtration and wash with pentane (4.870 g, 96% yield). The dichloride {[(2,4,6-Me₃C₆H₂) NCH₂CH₂]₂NH}HfCl₂ was identified by proton NMR. ¹H NMR (C₆D₆) δ 6.89 (s, 2), 6.84 (s, 2), 3.40 (m, 2), 2.95 (m, 2), 2.51 (s, 6), 2.45 (s, 6), 2.40 (m, 4), 2.14 (s, 6), N*H* was obscured.

### Preparation of {[(2,4,6-Me₃C₆H₂)NCH₂CH₂]₂NH}Hf(CH₂Ph)₂ (Hf-HN3)

A 250 mL round bottom flask was charged with a magnetic stir bar, tetrabenzyl hafnium (4.063 g, 7.482 mmol), and 150 mL of toluene under dry, oxygen-free nitrogen. Solid triamine ligand above (2.545 g, 7.495 mmol) was added with stirring over 1 minute (the desired compound precipitates). The volume of the slurry was reduced to 30 mL and 120 mL of pentane added with stirring. The solid pale yellow product was collected by filtration and dried under vacuum (4.562 g, 87% yield). ¹H NMR (C₆D₆) δ 7.21-6.79 (m, 12), 6.16 (d, 2), 3.39 (m, 2), 3.14 (m, 2), 2.65 (s, 6), 2.40 (s, 6), 2.35 (m, 2), 2.23 (m, 2), 2.19 (s, 6) 1.60 (s, 2), 1.26 (s, 2), NH obscured.

### Preparation of Catalyst 5A

To 0.858 g of MAO (2.640 g of a 30 weight percent solution in toluene, available from Albemarle Corporation, Baton Rouge, Louisiana) and 2.860 g of toluene in a 100 mL round bottom flask was added 0.067 g of HfCl₂-HN3. The solution was stirred for 15 minutes. 2.140 g of silica (Davison 948, calcined at 600°C, available from W.R. Grace, Davison Division, Baltimore, Maryland) was added followed by mixing. The mixture was dried overnight under vacuum affording 2.901 g of finished catalyst with a loading of 0.68 weight percent hafnium and an Al/Hf ratio of 129:1.

### Preparation of Catalyst 5B

To 0.792 g of MAO (2.640 g of a 30 weight percent solution in toluene, available from Albemarle Corporation, Baton Rouge, Louisiana) and 2.830 g of toluene in a 100 mL round bottom flask was added 0.080 g of Hf-HN3. The solution was stirred for 15 minutes. 2.130 g of silica (Davison 948, calcined at 600°C, available from W.R. Grace, Davison Division, Baltimore, Maryland) was added followed by mixing. The mixture was dried overnight under vacuum affording 2.908 g of finished catalyst with a loading of 0.68 weight percent hafnium and an Al/Hf ratio of 119:1.

### Comparative Example 5A: Slurry-Phase Ethylene Polymerization with Catalyst 5A

Polymerization was performed in the slurry-phase in a 1-liter autoclave reactor equipped with a mechanical stirrer, an external water jacket for temperature control, a septum inlet and vent line, and a regulated supply of dry nitrogen and ethylene. The reactor was dried and degassed at 160°C. Isobutane (400 mL) was added as a diluent and 0.7 mL of a 25 weight percent trioctyl aluminum solution in hexane was added as a scavenger using a gas tight syringe. The reactor was heated to 90°C. 0.200 g of finished Catalyst 5A was added with ethylene pressure and the reactor was pressurized with 113 psi (779 kPa) of ethylene. The polymerization was continued for 40 minutes while maintaining the reactor at 90°C and 113 psi (779 kPa) by constant ethylene flow. The reaction was stopped by rapid cooling and vented. 11.9 g of polyethylene was obtained (FI = no flow, activity = 311 g polyethylene/mmol catalyst•atm•h).

### Example 5B: Slurry-Phase Ethylene Polymerization with Catalyst 5B

Polymerization was performed in the slurry-phase in a 1-liter autoclave reactor equipped with a mechanical stirrer, an external water jacket for temperature control, a septum inlet and vent line, and a regulated supply of dry nitrogen and ethylene. The reactor was dried and degassed at 160°C. Isobutane (400 mL) was added as a diluent and 0.7 mL of a 25 weight percent trioctyl aluminum solution in hexane was added as a scavenger using a gas tight syringe. The reactor was heated to 90°C. 0.200 g of finished Catalyst 5B was added with ethylene pressure and the reactor was pressurized with 130 psi (896 kPa) of ethylene. The polymerization was continued for 30 minutes while maintaining the reactor at 90°C and 130 psi (896 kPa) by constant ethylene flow. The reaction was stopped by rapid cooling and vented. 29.1 g of polyethylene was obtained (FI = no flow, activity = 881 g polyethylene/mmol catalyst•atm•h).

From the data presented above under similar conditions the Group 15 containing metal catalyst compound having the substituted hydrocarbon leaving group, preferably the alkyl substituted with an aryl group of the invention, has a much higher productivity than the same compound having a halogen.

While the present invention has been described and illustrated by reference to particular embodiments, those of ordinary skill in the art will appreciate that the invention lends itself to variations not necessarily illustrated herein. For example, it is contemplated that two or more supported Group 15 containing catalyst compositions of the invention can be used alone or with an unsupported bulky ligand metallocene catalyst compound. Also it is contemplated that a Group 15 containing hafnium catalyst compound can be used with a Group 15 containing titanium or zirconium catalyst compound and/or a bulky ligand metallocene catalyst compound. Also it is contemplated that the catalyst systems of the invention may be used in single or multiple polymerization reactor configurations including those involving different types of processes. For these reasons, then, reference should be made solely to the appended claims for purposes of determining the true scope of the present invention.

## Claims

1. A process for polymerizing olefin(s) comprising contacting one or more olefin(s) under polymerization conditions with a catalyst system comprising a Group 15 containing hafnium catalyst compound represented by the formula: 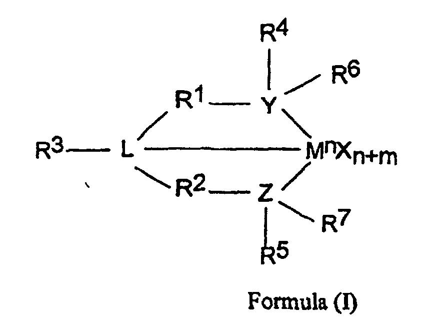 or 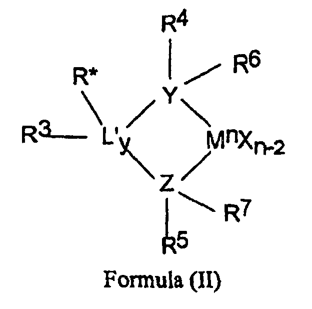 wherein M is hafnium;
each X is independently a leaving group;
y is 0 or 1;
n is the oxidation state of M;
m is the formal charge of the YZL or the YZL' ligand;
L is a Group 15 element;
L' is a Group 15 element or Group 14 containing group;
Y is a Group 15 element;
Z is a Group 15 element;
R¹ and R² are independently a C₁ to C₂₀ hydrocarbon group, a heteroatom containing group having up to twenty carbon atoms, or a group containing silicon, germanium, tin, lead, or phosphorus;
R³ is absent, a hydrocarbon group, hydrogen, a halogen, or a heteroatom containing group;
R⁴ and R⁵ are independently an alkyl group, an aryl group, a substituted aryl group, a cyclic alkyl group, a substituted cyclic alkyl group, a cyclic arylalkyl group, a substituted cyclic arylalkyl group or a multiple ring system;
R¹ and R² may be interconnected to each other, and/or R⁴ and R⁵ may be interconnected to each other;
R⁶ and R⁷ are independently absent, hydrogen, an alkyl group, halogen, heteroatom or a hydrocarbyl group; and
R* is absent, hydrogen, a Group 14 atom containing group, a halogen, or a heteroatom containing group.

2. The process of claim 1 wherein R⁴ and R⁵ are represented by the formula: 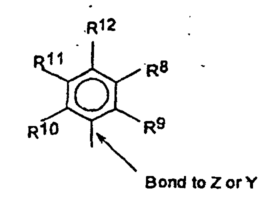 wherein R⁸ to R¹² are each independently hydrogen, a C₁ to C₄₀ alkyl group, a halide, a heteroatom, a heteroatom containing group containing up to 40 carbon atoms, preferably a C₁ to C₂₀ linear or branched alkyl group, preferably a methyl, ethyl, propyl or butyl group, any two R groups form a cyclic group and/or a heterocyclic group.

3. The process of claim 2 wherein R⁹, R¹⁰ and R¹² are independently a methyl, ethyl, propyl or butyl group, or wherein R⁹, R¹⁰ and R¹² are methyl groups, and R⁸ and R¹¹ are hydrogen.

4. The process of any one of the preceding claims wherein L, Y, and Z are independently nitrogen, R¹ and R² are a hydrocarbon radical, R³ is hydrogen, and R⁶ and R⁷ are absent, or wherein L and Z are independently nitrogen, L' is a hydrocarbyl radical, and R⁶ and R⁷ are absent.

5. The process of any one of the preceding claims wherein the Group 15 containing hafnium catalyst compound contains at least one substituted hydrocarbon leaving group having 6 or greater carbon atoms, preferably where the at least one substituted hydrocarbon leaving group is an aryl substitued alkyl group, and most preferably where the aryl substitued alkyl group is benzyl.

6. A process for polymerizing olefin(s) in the presence of a catalyst system comprising a Group 15 containing bidentate or tridentate ligated hafnium catalyst compound, wherein the hafnium metal atom is bound to at least one leaving group and to at least two Group 15 atoms, and wherein at least one of the at least two Group 15 atoms is bound to a Group 15 or 16 atom through a bridging group; and a bulky ligand metallocene catalyst compound.

7. The process of claim 1 or 6 wherein the catalyst system is supported on a carrier.

8. The process of claim 1 or 6 wherein the process is selected from the group consisting of a continuous gas phase process and a continuous slurry phase process.

9. The process claim 1 or 6 wherein the catalysts system further comprises an activator.

10. The process of claim 9 wherein the activator is a Lewis acid aluminum containing activator described by the formula:
RₙAl(ArHal)₃₋ₙ
where R is a monoanionic ligand;
ArHal is a halogenated C₆ aromatic or higher carbon number polycyclic aromatic hydrocarbon or aromatic ring assembly in which two or more rings (or fused ring systems) are joined directly to one another or together; and
n = 1 to 2, preferably n=1.

11. The process of claim 1 or 6 wherein the olefin(s) is ethylene, or propylene, or ethylene and at least one other monomer having from 3 to 20 carbon atoms.

12. A supported catalyst system comprising the Group 15 containing hafnium catalyst compound of claim 1, an activator, and a carrier.

13. A supported catalyst system comprising the Group 15 containing bidentate or tridentate ligated hafnium catalyst compound of claim 6 and a bulky ligand metallocene catalyst compound.

14. The supported catalyst system of claim 12 or 13 wherein the Group 15 containing hafnium catalyst compound and the bulky ligand metallocene catalyst compound, if present, are contacted with the activator to form a reaction product that is then contacted with the carrier.

15. The supported catalyst system of claim 12 or 13 wherein the activator is a Lewis acid aluminum containing activator described by the formula:
RₙAl(ArHal)₃₋ₙ
where R is a monoanionic ligand;
ArHal is a halogenated C₆ aromatic or higher carbon number polycyclic aromatic hydrocarbon or aromatic ring assembly in which two or more rings (or fused ring systems) are joined directly to one another or together; and
n = 1 to 2, preferably n=1.

16. Use of the Group 15 containing hafnium catalyst compound of claim 1 to produce a high molecular weight component in a multimodal polymer composition.

17. Use of a catalyst system comprising the Group 15 containing bidentate or tridentate ligated hafnium catalyst compound compound of claim 6 to produce a high molecular weight component and a bulky ligand metallocene catalyst compound to produce a low molecular weight component in a multimodal polymer composition.

18. The process of claim 1 wherein the polymerization process is a gas phase process conducted at a temperature from between 30°C and 124°C.

## Patentansprüche

1. Verfahren zum Polymerisieren eines (von) Polyolefins (Polyolefinen), umfassend das Inkontaktbringen von einem oder mehreren Polyolefin(en) unter Polymerisationsbedingungen mit einem Katalysatorsystem, umfassend eine ein Element der Gruppe 15 enthaltende Hafniumkatalysatorverbindung der Formel 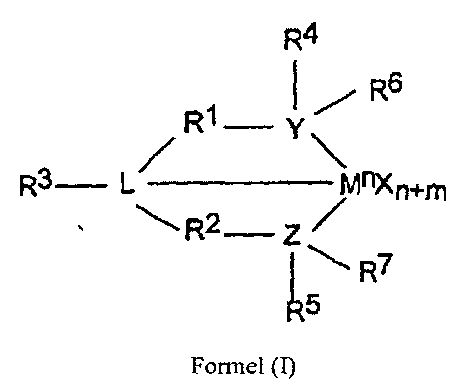 oder 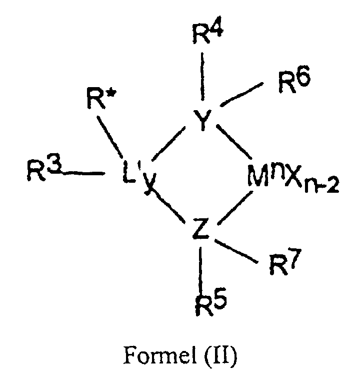 wobei M Hafnium ist,
jeder Rest X unabhängig voneinander eine Abgangsgruppe ist,
y 0 oder 1 ist,
n die Oxidationsstufe von M ist,
m die formale Ladung des YZL- oder des YZL'-Liganden ist,
L ein Element der Gruppe 15 ist,
L' ein Element der Gruppe 15 oder ein Element der Gruppe 14 enthaltende Gruppe ist,
Y ein Element der Gruppe 15 ist,
Z ein Element der Gruppe 15 ist,
R¹ und R² unabhängig eine C₁-C₂₀-Kohlenwasserstoffgruppe, eine ein Heteroatom enthaltende Gruppe mit bis zu 20 Kohlenstoffatomen oder eine Silicium, Germanium, Zinn, Blei oder Phosphor enthaltende Gruppe ist,
R³ fehlt, eine Kohlenwasserstoffgruppe, Wasserstoff, Halogen oder eine ein Heteroatom enthaltende Gruppe ist,
R⁴ und R⁵ unabhängig voneinander eine Alkylgruppe, eine Arylgruppe, eine substituierte Arylgruppe, eine cyclische Alkylgruppe, eine substituierte cyclische Alkylgruppe, eine cyclische Arylalkylgruppe, eine substituierte cyclische Arylalkylgruppe oder ein mehrfaches Ringsystem sind,
R¹ und R² miteinander verbunden sein können und/oder R⁴ und R⁵ miteinander verbunden sein können,
R⁶ und R⁷ unabhängig voneinander fehlen, Wasserstoff, eine Alkylgruppe, Halogen, ein Heteroatom oder eine Hydroalkylgruppe sind und
R* fehlt, Wasserstoff, eine ein Atom der Gruppe 14 enthaltende Gruppe, ein Halogen oder eine ein Heteroatom enthaltende Gruppe ist.

2. Verfahren nach Anspruch 1, wobei R⁴ und R⁵ dargestellt sind durch die Formel 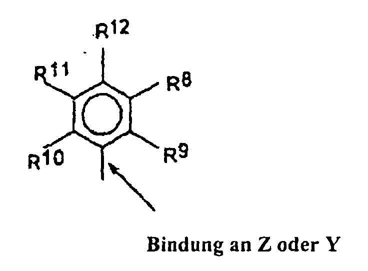 wobei R⁸ bis R¹² unabhängig voneinander Wasserstoff, eine C₁-C₄₀-Alkylgruppe, ein Halogenid, ein Heteroatom, eine ein Heteroatom enthaltende Gruppe, enthaltend bis zu 40 Kohlenstoffatome, vorzugsweise eine lineare oder verzweigte C₁-C₂₀ Alkylgruppe, vorzugsweise eine Methyl-, Ethyl-, Propyl- oder Butylgruppe sind, beliebige zwei R-Gruppen eine cyclische Gruppe und/oder heterocyclische Gruppe bilden.

3. Verfahren nach Anspruch 2, wobei R⁹, R¹⁰ und R¹² unabhängig voneinander eine Methyl-, Ethyl-, Propyl- oder Butylgruppe sind oder wobei R⁹, R¹⁰ und R¹² Methylgruppen sind und R⁸ und R¹¹ Wasserstoff sind.

4. Verfahren nach einem der vorangehenden Ansprüche, wobei L, Y und Z unabhängig Stickstoff sind, R¹ und R² ein Kohlenwasserstoffrest sind, R³ Wasserstoff ist und R⁶ und R⁷ fehlen oder wobei L und Z unabhängig voneinander Stickstoff sind, L' ein Kohlenwasserstoffrest ist und R⁶ und R⁷ fehlen.

5. Verfahren nach einem der vorangehenden Ansprüche, wobei die ein Element der Gruppe 15 enthaltende Hafniumkatalysatorverbindung mindestens eine substituierte Kohlenwasserstoffabgtangsgruppe mit 6 oder mehr Kohlenstoffatomen enthält, wobei vorzugsweise die mindestens eine substituierte Kohlenwasserstoffabgangsgruppe eine arylsubstituierte Alkylgruppe ist und wobei besonders bevorzugt die arylsubsituierte Alkylgruppe Benzyl ist.

6. Verfahren zum Polymerisieren eines (von) Olefins (Olefinen) in Gegenwart eines Katalysatorsystems, umfassend eine ein Element der Gruppe 15 enthaltende Bidentat- oder Tridentat-gebundene Hafniumkatalysatorverbindung, wobei das Hafniummetallatom an mindestens eine austretende Gruppe und an mindestens zwei Atome der Gruppe 15 gebunden ist und wobei mindestens ein der mindestens zwei Atome der Gruppe 15 durch eine Brückengruppe an ein Atom der Gruppe 15 oder 16 gebunden ist, und eine Metallocenkatalysatorverbindung mit sperrigem Liganden.

7. Verfahren nach Anspruch 1 oder 6, wobei das Katalysatorsystem an einen Träger gebunden ist.

8. Verfahren nach Anspruch 1 oder 6, wobei das Verfahren ausgewählt ist aus der Gruppe, bestehend aus einem kontinuierlichen Gasphasenverfahren und einem kontinuierlichen Aufschlämungsphasenverfahren.

9. Verfahren nach Anspruch 1 oder 6, wobei das Katalysatorsystem ferner einen Aktivator umfasst.

10. Verfahren nach Anspruch 9, wobei der Aktivator ein Lewissäurealuminium enthaltender Aktivator, beschrieben durch die Formel
RₙAl(ArHal)₃₋ₙ
ist, wobei R ein monoanionischer Ligand ist,
ArHal ein halogenierter C₆-aromatischer polycyclischer aromatischer Kohlenwasserstoff oder selbiger mit einer höheren Kohlenstoffanzahl oder ein aromatischer Ringzusammenschluss, in welchem zwei oder mehrere Ringe (oder kondensierte Ringsysteme) direkt aneinander gebunden oder miteinander verbunden sind, ist und
n = 1 bis 2, vorzugsweise n = 1.

11. Verfahren nach Anspruch 1 oder 6, wobei das (die) Olefin Ethylen oder Propylen oder Ethylen und mindestens ein anderes Monomer mit 3 bis 20 Kohlenstoffatomen ist (sind).

12. Trägergebundenes Katalysatorsystem, umfassend die ein Element der Gruppe 15 enthaltende Hafniumkatalysatorverbindung nach Anspruch 1 und einen Träger.

13. Trägergebundenes Katalysatorsystem, umfassend die ein Element der Gruppe 15 enthaltende Bidentat- oder Tridentat-gebundene Hafniumkatalysatorverbindung nach Anspruch 6 und eine Metallocenkatalysatorverbindung mit sperrigem Liganden.

14. Trägergebundenes Katalysatorsystem nach Anspruch 12 oder 13, wobei die ein Element der Gruppe 15 enthaltende Hafniumkatalysatorverbindung und, falls sie vorliegt, die Metallocenkatalysatorverbindung mit sperrigem Liganden mit dem Aktivator unter Bildung eines Reaktionsprodukts in Kontakt gebracht werden, das dann mit dem Träger in Kontakt gebracht wird.

15. Trägergebundenes Katalysatorsystem nach Anspruch 12, wobei der Aktivator ein Lewissäurealuminium enthaltender Aktivator, beschrieben durch die Formel
RₙAl(ArHal)₃₋ₙ
ist, wobei R ein monoanionischer Ligand ist,
ArHal ein halogenierter C₆-aromatischer polycyclischer aromatischer Kohlenwasserstoff oder selbiger mit einer höheren Kohlenstoffanzahl oder ein aromatischer Ringzusammenschluss, in welchem zwei oder mehrere Ringe (oder kondensierte Ringsysteme) direkt aneinander gebunden oder miteinander verbunden sind, ist und
n = 1 bis 2, vorzugsweise n = 1.

16. Verwendung der ein Element der Gruppe 15 enthaltenden Hafniumkatalysatorverbindung nach Anspruch 1 zur Herstellung eines Bestandteils mit hohem Molekulargewicht in einer multimodalen Polymerzusammensetzung.

17. Verwendung eines Katalysatorsystems, umfassend die ein Element der Gruppe 15 enthaltende Bidentat- oder Tridentat-gebundene Hafniumkatalysatorverbindung nach Anspruch 16 zur Herstellung eines Bestandteils mit hohem Molekulargewicht und eine Metallocenkatalysatorverbindung mit sperrigem Liganden zur Herstellung eines Bestandteils mit niedrigem Molekulargewicht in einer multimodalen Polymerzusammensetzung.

18. Verfahren nach Anspruch 1, wobei das Polymerisationsverfahren ein Gasphasenverfahren ist, das bei einer Temperatur zwischen 30 und 120°C durchgeführt wird.

## Revendications

1. Un procédé de polymérisation d' oléfine(s) comprenant la mise en contact d'une ou plusieurs oléfine(s) sous des conditions de polymérisation avec un système de catalyseur comprenant un élément du groupe 15 renfermant un composé de catalyseur d'hafnium représenté par la formule : 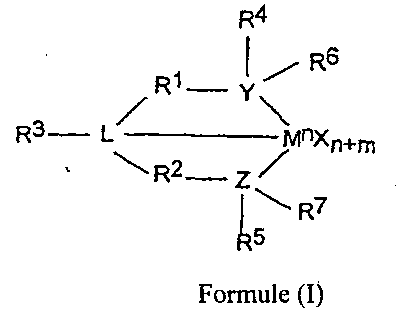 ou 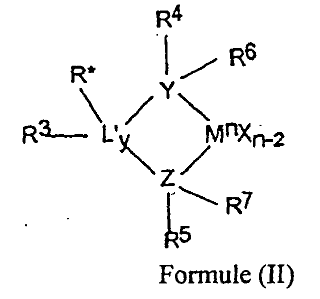 dans laquelle M est de l'hafnium ;
chaque X est indépendamment un groupe labile ;
y est 0 ou 1 ;
n est l'état d'oxydation de M ;
m est la charge formelle du ligand YZL ou YZL' ;
L est un élément du groupe 15 ;
L' est un groupe contenant un élément du groupe 14 ou un élément du groupe 15 ;
Y est un élément du groupe 15 ;
Z est un élément du groupe 15 ;
R¹ et R² sont indépendamment un groupe hydrocarboné en C₁-C₂₀, un groupe renfermant un hétéroatome ayant jusqu'à vingt atomes de carbone ou un groupe renfermant du silicium, du germanium, de l'étain, du plomb ou du phosphore ;
R³ est un groupe renfermant un hétéroatome ou de l'halogène, de l'hydrogène, un groupe hydrocarboné ou est absent ;
R⁴ et R⁵ sont indépendamment un groupe alkyle, un groupe aryle, un groupe aryle substitué, un groupe alkyle cyclique, un groupe alkyle cyclique substitué, un groupe arylalkyle cyclique, un groupe arylalkyle cyclique substitué ou un système de cycles multiples ;
R¹ et R² peuvent être reliés l'un à l'autre et/ou R⁴ et R⁵ peuvent être reliés l'un à l'autre ;
R⁶ et R⁷ sont indépendamment un groupe hydrocarbyle ou un hétéroatome, de l'halogène, un groupe alkyle, de l'hydrogène ou sont absents ; et
R* est un groupe renfermant un hétéroatome ou de l'halogène, un groupe renfermant un atome du groupe 14, de l'hydrogène ou est absent.

2. Le procédé selon la revendication 1, dans lequel R⁴ et R⁵ sont représentés par la formule : 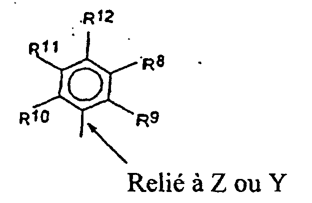 dans laquelle R⁸ à R¹² sont chacun indépendamment de l'hydrogène, un groupe alkyle en C₁ à C₄₀, un halogénure, un hétéroatome, un groupe contenant un hétéroatome renfermant jusqu'à 40 atomes de carbone, de préférence un groupe alkyle linéaire ou ramifié en C₁₀ à C₂₀, de préférence un groupe méthyle, éthyle, propyle ou butyle, l'un quelconque de deux groupes R forme un groupe cyclique et/ou un groupe hétérocyclique.

3. Le procédé selon la revendication 2, dans lequel R⁹, R¹⁰ et R¹² sont indépendamment un groupe méthyle, éthyle, propyle ou butyle ou dans lequel R⁹, R¹⁰ et R¹² sont des groupes méthyle et R⁸ et R¹¹ sont de l'hydrogène.

4. Le procédé selon l'une quelconque des revendications précédentes, dans lequel L, Y et Z sont indépendamment de l'azote, R¹ et R² sont un radical hydrocarboné, R³ est de l'hydrogène et R⁶ et R⁷ sont absents, ou dans lequel L et Z sont indépendamment de l'azote, L' est un radical hydrocarbyle et R⁶ et R⁷ sont absents.

5. Le procédé selon l'une quelconque des revendications précédentes, dans lequel le composé de catalyseur d'hafnium renfermant un élément du groupe 15 comprend au moins un groupe labile hydrocarboné substitué ayant 6 atomes de carbone ou plus, de préférence dans lequel au moins un groupe labile hydrocarboné substitué est un groupe alkyle à substitution aryle, notamment dans lequel le groupe alkyle à substitution aryle est du benzyle.

6. Un procédé de polymérisation d'oléfine(s) en présence d'un système de catalyseur comprenant un composé de catalyseur d'hafnium à ligation bidenté ou tridenté renfermant un élément du groupe 15, dans lequel l'atome de métal d'hafnium est relié à au moins un groupe labile et à au moins deux atomes du groupe 15 et dans lequel au moins un d'au moins deux atomes du groupe 15 est relié à un atome du groupe 15 ou 16 par l'intermédiaire d'un groupe pontant et un composé de catalyseur de métallocène à ligand massique.

7. Le procédé selon la revendication 1 ou 6, dans lequel le système de catalyseur est fixé sur un support.

8. Le procédé selon la revendication 1 ou 6, dans lequel le procédé est choisi dans le groupe comprenant un procédé à phase gazeuse continu et un procédé à phase en suspension continu.

9. Le procédé selon la revendication 1 ou 6, dans lequel le système de catalyseur comprend, en outre, un activateur.

10. Le procédé selon la revendication 9, dans lequel l'activateur est un aluminium acide de Lewis renfermant l'activateur illustré par la formule :
RₙAl(ArHal)₃₋ₙ
dans laquelle R est un ligand mono-anionique ;
ArHal est un composé aromatique en C₆ halogéné ou un hydrocarbure aromatique polycyclique à nombre d'atomes de carbone supérieur ou un ensemble de cycles aromatiques dans lequel deux ou plusieurs cycles (ou systèmes de cycles fusionnés) sont reliés directement l'un à l'autre ou conjointement ; et
n = 1 à 2, de préférence n = 1.

11. Le procédé selon la revendication 1 ou 6, dans lequel le/les oléfine(s) est/sont de l'éthylène ou du propylène ou de l'éthylène et au moins un autre monomère ayant de 3 à 20 atomes de carbone.

12. Un système de catalyseur fixé sur un support comprenant un composé de catalyseur d'hafnium renfermant un élément du groupe 15 selon la revendication 1, un activateur et un support.

13. Un système de catalyseur fixé sur un support comprenant un composé de catalyseur d'hafnium à ligation bidenté ou tridenté contenant un élément du groupe 15 selon la revendication 6 et un composé de catalyseur de métallocène à ligand massique.

14. Le système de catalyseur fixé sur un support selon la revendication 12 ou 13, dans lequel le composé de catalyseur d'hafnium renfermant un élément du groupe 15 et le composé de catalyseur de métallocène à ligand massique, s'il est présent, sont mis en contact avec l'activateur pour former un produit de réaction qui est ensuite mis en contact avec le support.

15. Le système de catalyseur fixé sur un support selon la revendication 12 ou 13, dans lequel l'activateur est un aluminium acide de Lewis renfermant l'activateur illustré par la formule :
RₙAl(ArHal)₃₋ₙ
dans laquelle R est un ligand mono-anionique ;
ArHal est un composé aromatique en C₆ halogéné ou un hydrocarbure aromatique polycyclique à nombre de carbone supérieur ou un ensemble de cycles aromatiques dans lequel deux ou plusieurs cycles (ou systèmes de cycles fusionnés) sont réunis directement l'un à l'autre ou conjointement ; et
n = 1 à 2, de préférence n = 1.

16. Utilisation du composé de catalyseur d'hafnium renfermant un élément du groupe 15 selon la revendication 1 pour produire un composant de poids moléculaire élevé dans une composition de polymère multimodale.

17. Utilisation d'un système de catalyseur comprenant le composé de catalyseur d'hafnium à ligation bidenté ou tridenté renfermant un élément du groupe 15 selon la revendication 6 pour produire un composant de poids moléculaire élevé et un composé de catalyseur de métallocène à ligand massique pour produire un composant de bas poids moléculaire dans une composition de polymère multimodale.

18. Le procédé selon la revendication 1 dans lequel le procédé de polymérisation est un procédé en phase gazeuse mis en oeuvre à une température se situant entre 30° C et 120° C.
